(19) Europäisches Patentamt
European Patent Office
Office européen des brevets

(11) **EP 3 560 185 B1**

(12) **EUROPÄISCHE PATENTSCHRIFT**

(45) Veröffentlichungstag und Bekanntmachung des Hinweises auf die Patenterteilung:
**21.07.2021 Patentblatt 2021/29**

(51) Int Cl.:
*H04N 5/225* (2006.01)   *G01B 11/30* (2006.01)
*G01B 11/24* (2006.01)   *G01N 21/25* (2006.01)
*H04N 5/335* (2011.01)   *H04M 1/247* (2021.01)
*H04N 5/232* (2006.01)

(21) Anmeldenummer: **17823141.1**

(22) Anmeldetag: **21.12.2017**

(86) Internationale Anmeldenummer:
**PCT/EP2017/084212**

(87) Internationale Veröffentlichungsnummer:
**WO 2018/115346 (28.06.2018 Gazette 2018/26)**

(54) **SYSTEM UND VERFAHREN ZUM ERFASSEN VON MESSBILDERN EINES MESSOBJEKTS**

SYSTEM AND METHOD FOR CAPTURING MEASUREMENT IMAGES OF AN OBJECT TO BE MEASURED

SYSTÈME ET PROCÉDÉ DE SAISIE D'IMAGES DE MESURE D'UN OBJET DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2016 DE 102016226206**

(43) Veröffentlichungstag der Anmeldung:
**30.10.2019 Patentblatt 2019/44**

(73) Patentinhaber: **Fraunhofer-Gesellschaft zur Förderung der angewandten Forschung e.V.
80686 München (DE)**

(72) Erfinder:
• **SEIFFERT, Udo
  38829 Harsleben (DE)**
• **HERZOG, Andreas
  14776 Brandenburg (DE)**
• **BACKHAUS, Andreas
  39108 Magdeburg (DE)**

(74) Vertreter: **Pfenning, Meinig & Partner mbB Patent- und Rechtsanwälte
Joachimsthaler Straße 10-12
10719 Berlin (DE)**

(56) Entgegenhaltungen:
**EP-A1- 2 690 397     WO-A1-03/067936**

• **ZAFAR IQBAL ET AL: "Spectral Fingerprinting on a Standard Mobile Phone", JOURNAL OF SENSORS, Bd. 2010, 1. Januar 2010 (2010-01-01), Seiten 1-9, XP055453581, US ISSN: 1687-725X, DOI: 10.1155/2010/381796**
• **Michael G. Madden ET AL: "A Machine Learning Application for Classification of Chemical Spectra" In: "Applications and Innovations in Intelligent Systems XVI", 1. Januar 2009 (2009-01-01), Springer London, London, XP055453276, ISBN: 978-1-84882-215-3 Seiten 77-90, DOI: 10.1007/978-1-84882-215-3_6, das ganze Dokument**

EP 3 560 185 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein System zum Erfassen von Messbildern eines Messobjekts sowie ein Verfahren zum Erfassen von Messbildern eines Messobjekts mittels des Systems und ein entsprechendes Computerprogrammprodukt.

In vielen technischen und nicht-technischen Anwendungen hängen interessierende Eigenschaften eines Objektes von der (bio-)chemischen Zusammensetzung des Objekts ab. Auch können Strukturen auf der Oberfläche oder oberflächennahen Schichten, je nach deren Transparenz in bestimmten Spektralbereichen, des Objektes, die mit bloßem Auge nicht sichtbar sind, bestimmte Eigenschaften des Objektes beeinflussen. Für eine zufriedenstellende Beurteilung solcher Eigenschaften ist daher die optische Erfassung von Größe, Form und Farbe des Objekts oder der makroskopischen (mit bloßem Auge noch erkennbaren) Oberflächentextur des Objekts in der Regel nicht ausreichend. Exemplarisch sei die objektive Erfassung des Zustandes von Lebensmitteln im Hinblick auf Frische oder Unbehandeltheit, die verschleierte Nachbesserung von Autolacken nach Unfallschäden, aber auch das Erkennen von Fälschungen bei Dokumenten, Medikamenten oder hochwertigen Textilien genannt.

In vielen Fällen, vor allem in gewerblichen Anwendungen und in der Forschung, kommt die hyperspektrale Bilderfassung von Objekten zur Anwendung. Hierbei werden von dem Objekt hyperspektrale Messbilder erfasst, welche die spektralen Reflexionseigenschaften des Objektes ortsaufgelöst darstellen. Auf der Grundlage dieser Messbilder können die jeweils interessierenden Eigenschaften des Objektes beurteilt werden. Für die Erfassung hyperspektraler Messbilder sind zwei Ansätze bekannt. Beim ersten Ansatz wird das Objekt mit einer breitbandigen Lichtquelle beleuchtet, das reflektierte Licht über schmalbandige Frequenzfilter, Prismen oder Gitter in seine spektralen Bestandteile getrennt und mittels einer Spektralkamera einzeln abgebildet. Die breitbandige gleichmäßige Beleuchtung lässt sich großflächig künstlich realisieren oder das Tageslicht als natürliche Beleuchtung nutzen. Gemäß dem zweiten Ansatz wird dieses Prinzip umgekehrt und eine breitbandige Grauwertkamera zur Bildaufnahme verwendet und das Objekt sequenziell mit schmalbandigen Lichtquellen beleuchtet. Diese Variante wird vor allem bei kleinflächigen Objekten im Laborbereich oder der Mikroskopie angewendet. Zur Beleuchtung werden dann beispielsweise nach Spektren sortierte LEDs oder Filterräder eingesetzt.

Ein Nachteil der bekannten Verfahren zur Erfassung hyperspektraler Messbilder eines Objekts sind insbesondere die hohen Kosten für die hierfür benötigten Geräte, bei denen es sich in der Regel um komplexe Labormessgeräte handelt, und die in vielen Fällen für bestimmte Anwendungen eingerichtet und optimiert sind. Diesen Nachteil haben auch viele andere Verfahren, mit denen Messbilder von zu untersuchenden Objekten erfasst werden. Viele technisch geeignete Verfahren lassen sich daher in der Praxis oftmals nicht wirtschaftlich sinnvoll umsetzen, insbesondere im Bereich des Konsumenten. Weitere Nachteile vieler bekannter Verfahren zum Erfassen von Messbildern von zu untersuchenden Objekte ist außerdem der hohe zeitliche Aufwand oder die Erfordernis technischen Spezialwissens bei der Bedienung der Geräte bzw. bei der Durchführung der Verfahren.

Ein Beispiel eines Systems zum Erfassen von Messbildern eines Messobjekts gemäß dem Oberbegriff des Hauptanspruchs sowie ein entsprechendes Verfahren gemäß dem Oberbegriff des Nebenanspruchs ist in der Veröffentlichung Zafar Afar Iqbal et al., Spectral Fingerprinting on a Standard Mobile Phone, Journal of Sensors, Bd. 2010, 1. Januar 2010 beschrieben. Weiterer Stand der Technik ist den Veröffentlichungen EP 2 690 397 A1 und Michael G. Madden et al., A Machine Learning Application for Classification of Chemical Spectra", Applications and Innovations in Intelligent Systems XVI, 1. Januar 2009, Springer London zu entnehmen.

Es stellt sich somit die Aufgabe, ein System zum Erfassen von Messbildern eines zu untersuchenden Objektes, welches auch als Messobjekt bezeichnet wird, vorzuschlagen, das möglichst kostengünstig, möglichst einfach bedienbar und möglichst flexibel einsetzbar ist. Die Messbilder sollen aber dennoch eine möglichst gute Beurteilung interessierender Eigenschaften des Objekts erlauben. Außerdem soll ein Verfahren zum Erfassen entsprechender Messbilder vorgeschlagen werden, das möglichst einfach und möglichst kostengünstig durchgeführt werden kann und flexibel einsetzbar ist. Schließlich soll ein entsprechendes Computerprogrammprodukt vorgeschlagen werden, dass direkt in einen internen Speicher des vorgeschlagenen Systems geladen werden kann, und Softwarecode umfasst, mit denen die Schritte des vorgeschlagenen Verfahrens ausgeführt werden, wenn das Computerprogrammprodukt auf dem System läuft.

Diese Aufgabe wird gelöst durch ein System gemäß dem Hauptanspruch sowie durch ein Verfahren und ein Computerprogrammprodukt gemäß den nebengeordneten Patentansprüchen. Weiterentwicklungen und besondere Ausführungsbeispiele ergeben sich aus den abhängigen Ansprüchen, aus der nachfolgenden Beschreibung und aus den Figuren.

Das vorgeschlagene System zum Erfassen von Messbildern eines Messobjekts umfasst somit mindestens ein mobiles elektronisches Gerät, wie beispielsweise ein Smartphone oder einen Tablet-Computer oder einen anderen (digitalen) Computer. Das (mindestens eine) mobile elektronische Gerät, das im Folgenden oftmals auch einfach als das "Gerät" bezeichnet wird, umfasst (jeweils):

- ein Gehäuse,
- eine in dem Gehäuse integrierte Kamera zum Aufnehmen von Messbildern eines Messobjekts innerhalb eines Beobachtungsbereichs der Kamera, also eines mittels der Kamera erfassbaren Raumbereichs,

- einen in dem Gehäuse integrierten Bildschirm zum lichtemittierenden Anzeigen von auf dem Bildschirm dargestellten Bildern, beispielsweise zum Anzeigen einer vordefinierten Beleuchtungsbildfolge in Form von auf dem Bildschirm sequentiell dargestellten Bildern, wobei der Bildschirm dem Beobachtungsbereich der Kamera zugewandt ist,
- eine in dem Gehäuse integrierte Steuereinheit, die eingerichtet ist, den Bildschirm des mobilen elektronischen Geräts anzusteuern, mehrere verschiedene Beleuchtungsbilder einer vordefinierten Beleuchtungsbildfolge nacheinander anzuzeigen, wobei die Steuereinheit eingerichtet ist, die Kamera des mobilen elektronischen Geräts anzusteuern, synchron zum Anzeigen eines jeden Beleuchtungsbildes der vordefinierten Beleuchtungsbildfolge jeweils ein Messbild von dem Messobjekt zu erfassen.

Das vorgeschlagene Verfahren zum Erfassen von Messbildern eines Messobjekts kann mit dem hier vorgeschlagenen System durchgeführt werden und umfasst die Schritte:

- Ansteuern des Bildschirms des mobilen elektronischen Geräts mittels der Steuereinheit, mehrere verschiedene Beleuchtungsbilder der vordefinierten Beleuchtungsbildfolge nacheinander anzuzeigen,
- Ansteuern der Kamera des mobilen elektronischen Geräts, synchron zum Anzeigen eines jeden Beleuchtungsbildes der vordefinierten Beleuchtungsbildfolge jeweils ein Messbild von dem Messobjekt zu erfassen.

Das elektronische mobile Gerät umfasst typischerweise mindestens einen internen Datenspeicher, der in das Gehäuse des Geräts integriert ist. Der interne Datenspeicher ist typischerweise ein volatiler oder nicht-volatiler Datenspeicher oder eine Kombination hiervon, beispielsweise ein RAM, ein ROM, ein Festplattenlaufwerk oder ein Solid-State-Drive (Halbleiterlaufwerk) oder eine Kombination hiervon.

Das vorgeschlagene Computerprogrammprodukt kann direkt in den internen Datenspeicher des Geräts geladen werden. Das Computerprogrammprodukt umfasst Softwarecodeabschnitte, mit denen zumindest die oben genannten Schritte des vorgeschlagenen Verfahrens (und gegebenenfalls weitere Schritte des Verfahrens) ausgeführt werden, wenn das Computerprogrammprodukt auf dem mobilen elektronischen Gerät geladen ist und läuft.

Bei dem Computerprogrammprodukt handelt es sich beispielsweise um ein auf einem Datenspeicher ("Träger") gespeichertes Computerprogramm. Bei dem Datenspeicher handelt es sich beispielsweise um eine Computerhardware, wie beispielsweise einen volatilen oder nicht-volatilen Datenspeicher, beispielsweise um den genannten internen Datenspeicher des Geräts oder um einen weiteren Datenspeicher des Systems außerhalb des mobilen elektronischen Geräts, beispielsweise um einen Datenspeicher eines Computers wie beispielsweise eines Computerservers oder um einen Datenspeicher, der Teil eines Computernetzwerkes, wie beispielsweise das Internet oder eine (Computer-)Cloud, ist oder durch das Computernetzwerk (z.B. Internet oder Cloud) generiert wird. Der Computer bzw. Computerserver, das Computernetzwerk (z.B. Internet oder Cloud) kann beispielsweise eine weitere Komponente des Systems sein. Als möglicher (weiterer) Datenspeicher kommt beispielsweise ein RAM, ein ROM, ein Festplattenlaufwerk oder ein Solid-State-Drive oder Kombinationen hieraus in Frage oder aber auch eine CD, eine DVD oder ein USB-Stick.

Das Gerät umfasst typischerweise mindestens einen (digitalen) Prozessor, zum Beispiel mindestens einen Hauptprozessor (CPU), welcher selbst beispielsweise eine oder mehrere integrierte Einheiten (Coprozessoren) aufweisen kann, wie beispielsweise einen Grafikprozessor. Der Prozessor kann beispielsweise in Form eines elektronischen Schaltkreises realisiert sein, beispielsweise als ein Halbleiterchip. Die oben genannte Steuereinheit des Geräts kann eine (logische oder integrierte) Einheit des Prozessors sein. Der Prozessor ist beispielsweise mit dem internen Datenspeicher des Geräts verbunden, um auf den Datenspeicher zuzugreifen, insbesondere um das in den internen Datenspeicher geladene Computerprogrammprodukt bzw. dessen geladenen Softwarecodeabschnitte abzurufen und anschließend (als Steuereinheit des Geräts) die oben genannten Schritte des Verfahrens (synchrones Ansteuern von Bildschirm und Kamera) auszuführen. Die jeweiligen Schritte des vorgeschlagenen Verfahrens können beispielsweise in Form von Anweisungen in den Softwarecodeabschnitten codiert sein, die mittels des Prozessors des Geräts ausführbar sind. Bei der Ausführung dieser Anweisungen fungiert der Prozessor dann beispielsweise als die genannte Steuereinheit des Geräts.

Das vorgeschlagene Verfahren kann weitere Schritte umfassen, die weiter unten näher beschrieben werden. Die Steuereinheit des Geräts kann zur Ausführung dieser weiteren Verfahrensschritte eingerichtet sein. Entsprechend kann auch das Computerprogrammprodukt weitere Softwarecodeabschnitte enthalten, in denen entsprechende weitere Anweisungen codiert sein können, die mittels des Prozessors des Geräts ausgeführt werden können. Bei der Ausführung dieser weiteren Anweisungen fungiert der Prozessor dann beispielsweise wiederum als die genannte Steuereinheit des Geräts oder als eine weitere Einheit des Geräts, beispielsweise als eine Auswerteeinheit des Geräts.

Alternativ können die weiteren Verfahrensschritte auch mittels anderer Komponenten des Systems ausgeführt werden. Beispielsweise kann die Auswerteeinheit extern des mobilen elektronischen Geräts angeordnet sein. Bei der Auswerteeinheit kann es sich daher beispielsweise auch um einen entsprechend eingerichteten Computer, beispielsweise einen Computerserver eines Computernetzwerkes, handeln oder um eine (logische oder integrierte) Einheit eines Prozessors des Computers. Es sind auch Mischformen möglich, in denen die Auswerteinheit auf mehrere Komponenten des Systems verteilt ist und beispielsweise durch (logische oder integrierte) Einheiten mehrerer Prozessoren gebildet ist, beispielsweise des Prozessors des Geräts und eines Prozessors des genannten Computers bzw. Computerservers.

In manchen Ausführungsbeispielen ist das Verfahren also mittels des mobilen elektronischen Geräts alleine vollständig durchführbar. In anderen Ausführungsbeispielen wird das Verfahren teilweise auch mittels anderer Komponenten des Systems durchgeführt, beispielsweise mittels eines oder mehreren Computern (wie z.B. Internet oder Cloud), wobei die Kommunikation und Datenübertragung zwischen dem Gerät und den anderen Komponenten beispielsweise über das Internet oder über eine Cloud erfolgen kann.

Das Speichern von Daten oder anderen anwendungsrelevanten Informationen in einem externen Speichersystem (z.B. einem Cloudspeicher) ist weder aus funktionalen noch sicherheitstechnischen Gründen erforderlich, steht den hier beschriebenen Konzepten jedoch auch nicht entgegen. Beispielsweise kann die Verwendung externer Datenspeicher dann vorgesehen sein, wenn die Speicherung bestimmter Daten auf dem internen Datenspeicher des mobilen Geräts aus bestimmten Gründen nicht möglich ist, beispielsweise aufgrund großer Datenmengen, aus Lizenzgründen und/oder aus Sicherheitsgründen.

Eine hauptsächlich oder ausschließlich lokale Verarbeitung und/oder Speicherung von Daten mittels des mobilen Geräts kann generell oder in bestimmten Fällen vorgesehen sein, beispielsweise

(1) zur Reduzierung des übertragenen Datenvolumens von dem mobilen Gerät zu einem externen Server / Speicher,

(2) bei fehlender Abdeckung oder nicht ausreichender Bandbreite einer mobilen Datenverbindung am jeweiligen Ort der Messung (z.B. auf dem landwirtschaftlich genutzten Feld oder in Stahlbetongebäuden), und

(3) bei sensiblen Daten, welche beispielsweise das Messobjekt, den Ort der Messung oder den Nutzer selbst betreffen können, insbesondere wenn das mobile Gerät mit einem GPS-Modul ausgestattet ist. Als Beispiele seien etwa die Messung von geheimen Objekten oder geheimen chemische Oberflächenzusammensetzungen genannt wie auch die Messung an einem Ort, der geheim gehalten werden soll, beispielsweise wenn ein Ort zur Aufbewahrung des jeweiligen Messobjekts dient oder wenn der Ort der Messung oder die Messdaten ungewollte Rückschlüsse auf den Nutzer ermöglichen könnten, z.B. über den gesundheitlichen Zustand des Nutzers, seinen Wohnort oder sein Konsumverhalten.

Beispielsweise kann die Steuereinheit des mobilen Gerätes und/oder, sofern vorhanden, die Auswerteeinheit des mobilen Gerätes eingerichtet sein, generell oder zumindest in vordefinierten Anwendungen die Auswertung die Auswertung der Messdaten vollständig selbst durchzuführen und alle anfallenden Daten ausschließlich in dem internen Datenspeicher zu speichern. Die Steuereinheit kann ferner eingerichtet sein, die Übertragung der Messdaten und/oder hieraus abgeleiteter Daten (insbesondere GPS-Daten) auf externe Geräte zu vermeiden oder zu blockieren. Darüber hinaus kann auf Basis der GPS-Daten die Funktionalität des Systems gesteuert, eingeschränkt, oder gänzlich unterbunden werden.

Sofern im Folgenden oder in den Ansprüchen das "Eingerichtetsein" der Steuereinheit oder der Auswerteeinheit zur Durchführung weiterer Operationen beschrieben ist, so sind diese Operationen auch als mögliche (optionale) Schritte des vorgeschlagenen Verfahrens zu verstehen. Entsprechend kann auch das Computerprogrammprodukt Softwarecodeabschnitte umfassen, in denen Anweisungen zum Ausführen dieser weiteren Operationen kodiert sind, beispielsweise zum Ausführen durch den Prozessor des Geräts oder einer anderen Komponente des Systems. Sofern im Folgenden umgekehrt beschrieben wird, das Verfahrensschritte mittels einer Komponente des Systems ausgeführt werden können, wie beispielsweise mittels der Steuereinheit, der Auswerteeinheit oder einer anderen Komponente, dann wird dadurch auch ein entsprechendes "Eingerichtetsein" der jeweiligen Komponenten impliziert. Dieses "Eingerichtetsein" kann beispielsweise wiederum durch Laden des entsprechend ausgestalteten Computerprogrammprodukts, beispielsweise auf das Gerät oder den genannten weiteren Computer des Systems, ermöglicht werden.

Die vordefinierte Beleuchtungsbildfolge ist typischerweise durch Beleuchtungsparameter teilweise oder vorzugsweise vollständig definiert. Konkrete Beispiele für Beleuchtungsparameter werden weiter unten beschrieben. Die Beleuchtungsparameter sind typischerweise auf mindestens einem Datenspeicher des Systems gespeichert, beispielsweise auf dem internen Datenspeicher des mobilen elektronischen Geräts und/oder auf einem Datenspeicher einer anderen Komponente des Systems, beispielsweise des genannten Computers. Beispielsweise kann durch das Laden des Computerprogrammprodukts auf das Gerät eine automatische Speicherung der Beleuchtungsparameter auf dem internen Speicher des Geräts erfolgen. Beispielsweise kann der Softwarecode des Computerprogrammprodukts Definitionen und/oder Werte der Beleuchtungsparameter beinhalten. Die Steuereinheit des mobilen elektronischen Geräts kann eingerichtet sein, die in dem mindestens einen Datenspeicher gespeicherte Beleuchtungsparameter aus dem Datenspeicher abzurufen und auf der Grundlage der abgerufenen Beleuchtungsparameter die vordefinierte Beleuchtungsbildfolge zu ermitteln. Typischerweise steuert die Steuereinheit erst danach den Bildschirm zum Anzeigen der Beleuchtungsbilder der so ermittelten vordefinierten Beleuchtungsbildfolge an und synchron hierzu die Kamera zum Aufnehmen der Messbilder an.

Das mobile elektronische Gerät kann eine Benutzerschnittstelle aufweisen, mit Hilfe derer das Gerät bedient werden kann, beispielsweise um das vorgeschlagene Verfahren durchzuführen. Beispielsweise kann über die Benutzerschnittstelle die vordefinierte Beleuchtungsbildfolge einstellbar oder zumindest beeinflussbar sein, beispielsweise durch Einstellen oder Verändern mindestens eines der Beleuchtungsparameter. Zusätzlich oder alternativ kann mittels der Benutzerschnittstelle eine Auswahl zwischen verschiedenen (gespeicherten) vordefinierten Beleuchtungsbildfolgen ermöglicht sein, wobei sich die Beleuchtungsbildfolgen beispielsweise durch einen oder mehrere Beleuchtungsparameter voneinander unterscheiden. Zusätzlich oder alternativ ist es außerdem möglich, dass mittels der Benutzerschnittstelle die Art des zu untersuchenden Messobjekts eingegeben werden kann. Neben einer solchen Eingabe können mittels der Benutzerschnittstellen weitere Eingaben ermöglicht sein, beispielsweise eine Auswahl interessierender Eigenschaften des jeweils ausgewählten Messobjekts. Von derartigen Eingaben über die Benutzerschnittstelle kann neben der Definition der Beleuchtungsbildfolge auch die nachfolgende Auswertung der Messbilder abhängen. Beispielsweise können die Eingaben auch von einer Auswerteeinheit des Systems berücksichtigt werden, wie weiter unten beschrieben wird.

Beispielsweise kann vorgesehen sein, dass mehrere verschiedene Beleuchtungsbildfolgen bzw. mehrere verschiedene vordefinierte Sätze von Beleuchtungsparametern, welche jeweils eine der mehreren Beleuchtungsbildfolgen definieren, vordefiniert sind und wie oben beschrieben in einem oder mehreren der genannten Datenspeicher gespeichert sind. Die verschiedenen vordefinierten Beleuchtungsbildfolgen bzw. Beleuchtungsparametersätze können beispielsweise jeweils einer von mehreren verschiedenen vordefinierten (Mess-)Anwendungen (beispielsweise definiert durch das jeweilige Messobjekt, die interessierende Eigenschaft und/oder Handlungsempfehlung) zugeordnet sein. (Beispiele verschiedener Anwendungen werden weiter unten angegeben.) Beispielsweise kann vorgesehen sein, dass der Nutzer (beispielsweise über die Nutzerschnittstelle des mobilen Gerätes) eine konkrete Anwendung auswählt (beispielsweise aus mindestens einer mittels der Nutzerschnittstelle angezeigten Anwendungsliste) und die Steuereinheit anschließend in Abhängigkeit von der ausgewählten Anwendung aus dem Datenspeicher die zu der ausgewählten Anwendung gehörige vordefinierte Beleuchtungsbildfolge (bzw. Beleuchtungsparameter) ausliest und danach die Messung mit der ausgelesenen Beleuchtungsbildfolge (bzw. den ausgelesenen Beleuchtungsparametern) wie beschrieben durchführt. Zusätzlich oder alternativ ist es auch möglich, dass die Auswertung der Messbilder von der ausgewählten Anwendung abhängt.

Der Bildschirm kann als ein Touchscreen ausgestaltet sein und somit als die genannte Benutzerschnittstelle des Geräts dienen, beispielsweise über die Darstellung einer graphischen Nutzeroberfläche mit auf dem Touchscreen dargestellten Eingabefeldern.

Die Benutzerschnittstelle kann außerdem eingerichtet sein, eine Warnmeldung auszugeben, beispielsweise, wenn Umgebungslichteinflüsse als zu groß beurteilt werden oder falls eine durchgeführte Bildregistrierung der Messbilder oder eine Objekterkennung, beispielsweise aufgrund der Objekteigenschaften oder des Benutzerverhaltens nicht erfolgreich durchgeführt werden konnte.

Die Benutzerschnittstelle kann eine akustische Ausgabe des Geräts beinhalten, welche beispielsweise die genannten Warnmeldungen erzeugen kann. Die Benutzerschnittstelle kann ein Vibrationsmodul des Geräts beinhalten, welches beispielsweise die genannten Warnmeldungen erzeugen kann. Weitere Benutzerschnittstellen können beispielsweise mittels weiterer kommunizierender Geräte mit Display realisiert werden, wie zum Beispiel Smartwatches und Head-Mounted Displays. Die verschiedenen Module können, sofern jeweils vorhanden, dabei auch in Kombination verwendet werden.

Der mindestens eine interne Datenspeicher des Geräts oder ein externer Datenspeicher, beispielsweise des genannten weiteren Computers, kann zum (Zwischen-)Speichern der aufgenommenen Messbilder dienen. Entsprechend kann die Steuereinheit eingerichtet sein, eine Übertragung der aufgenommenen Messbilder auf diesen mindestens einen Datenspeicher durchzuführen oder zu initiieren.

Außerdem kann die Steuereinheit eingerichtet sein, den Bildschirm anzusteuern, die aufgenommenen Messbilder anzuzeigen, beispielsweise automatisch nach dem Aufnehmen der Messbilder. Beispielsweise können mittels des Bildschirms beispielsweise Messergebnisse auf dem Bildschirm während oder unmittelbar nach der Messung auf dem Bildschirm des Geräts angezeigt werden und beispielsweise ein aufgenommenes Bild des Messobjekts oder ein momentanes Live-Bild der Kamera auf dem Bildschirm überlagern, um auf diese Weise beispielsweise Augmented-Reality-Techniken umzusetzen.

Auf dem mindestens einen internen Datenspeicher des Geräts kann beispielsweise auch ein Betriebssystem des Geräts installiert sein, wie beispielsweise iOS, Android, Windows, Linux, Blackberry OS oder ein anderes Betriebssystem, sowie typischerweise weitere Anwendungsprogramme, wie beispielsweise ein Internetbrowser und/oder eine App-Store-Anwendung. Über die App-Store-Anwendung kann beispielsweise eine (Internet-)Verbindung des Geräts zu einem App-Store, also einer internetbasierten digitalen Vertriebsplattform für Anwendungssoftware, herstellbar sein, wie beispielsweise App Store von Apple oder Play Store von Google. In einem Ausführungsbeispiel ist das Computerprogrammprodukt als eine App über diese App-Store-Anwendung auf den internen Datenspeicher des Geräts ladbar und wird dort beispielsweise dauerhaft (beispielsweise bis zu einem von dem Nutzer initiierten und/oder bestätigten Löschvorgang) gespeichert. Eine weitere Möglichkeit ist, das Computerprogrammprodukt bzw. die App direkt (z.B. per USB-Kabel) auf das Gerät, insbesondere das Smartphone, zu kopieren, sofern dies durch das jeweilige Betriebssystem nicht blockiert wird. In einem weiteren Ausführungsbeispiel ist das Computerprogrammprodukt als eine Web-App über den Internet-Browser des Geräts von einer Internet-Seite eines Providers auf den internen Speicher des Geräts ladbar. Die Web-App wird beispielsweise temporär (beispielsweise nur für einen vordefinierten Zeitraum oder nur für eine vordefinierte Anzahl von Durchführungen des Verfahrens) auf dem internen Speicher gespeichert und anschließend automatisch wieder vom internen Speicher des Geräts gelöscht. In allen Fällen aber ist das Computerprogrammprodukt vorzugsweise direkt nach dem Laden in den internen Speicher des Geräts auf dem Gerät lauffähig und für einen Nutzer für die Durchführung des Verfahrens verwendbar.

Das Gerät umfasst typischerweise einen oder mehrere kabelgebundene oder vorzugsweise drahtlose Datenschnittstellen, wie beispielsweise mindestens eine Funkschnittstelle, um das Gerät beispielsweise mit dem Internet oder möglichen weiteren Komponenten des Systems, wie beispielsweise einem oder mehreren Computerservern, verbinden zu können, beispielsweise über das Internet.

Das mobile (portable) elektronische Gerät ist möglichst leicht, um von einem Nutzer (insbesondere während der oben genannten Verfahrensschritte, also während der Anzeige der Beleuchtungsbilder und der Erfassung der Messbilder) bequem mit zwei Händen oder vorzugsweise mit nur einer Hand in einer geeigneten Position relativ zum Messobjekt ausgerichtet und gehalten werden zu können. Das Gerät wiegt daher vorzugsweise weniger als 3 kg, weniger als 2 kg oder weniger als 1 kg. Eine maximale Kantenlänge des Gehäuses beträgt typischerweise nicht mehr als 30 cm, typischerweise weniger als 25 cm oder weniger als 20 cm. Beispielsweise kann das Gehäuse im Wesentlichen quaderförmig ausgestaltet sein. Eine minimale Kantenlänge beträgt typischerweise weniger als 5 cm, vorzugsweise weniger als 2 cm.

Die Kamera umfasst in der Regel ein Objektiv, das auf einer Vorderseite des Gehäuses angeordnet ist und den Beobachtungsbereich der Kamera definiert. Der Bildschirm ist dann typischerweise ebenfalls auf der Vorderseite des Gehäuses angeordnet. Die Kamera (zumindest das Objekt der Kamera) und der Bildschirm sind typischerweise auf der gleichen Seite des Gehäuses angeordnet bzw. von der gleichen Seite des Gehäuses aus sichtbar. Die Kamera umfasst typischerweise außerdem einen Bildsensor, beispielsweise einen lichtempfindlichen Halbleiterchip, wie beispielsweise ein CCD - oder CMOS-Sensor oder einen InGaAs-Sensor.

Ferner kann das Gerät einen Lautsprecher und ein Mikrophon umfassen, um beispielsweise mittels einer in dem internen Speicher installierten Telefonie-Anwendung Telefonate über ein mobiles Funktelefonnetz oder über das Internet zu ermöglichen. Außerdem kann das Gerät einen (wiederaufladbaren) Energiespeicher umfassen zum Versorgen des Geräts mit elektrischer Energie, insbesondere des Bildschirms, der Kamera und der Steuereinheit des Geräts.

Bei der Durchführung des Verfahrens mittels des Systems emittiert der Bildschirm des Geräts während des Anzeigens der Beleuchtungsbilder Licht. Dadurch, dass der Bildschirm dem Beobachtungsbereich der Kamera zugewandt ist, kann ein in dem Beobachtungsbereich der Kamera angeordnetes Messobjekt somit mittels des Bildschirms beleuchtet werden. Hierbei trifft von dem Bildschirm das beim Anzeigen der Beleuchtungsbilder emittierte Licht auf das Messobjekt, wird an dem Messobjekt reflektiert und von der Kamera erfasst. Hierbei tritt das reflektierte Licht typischerweise durch das Objektiv der Kamera in die Kamera ein und wird auf dem Bildsensor der Kamera abgebildet.

Der Bildsensor der Kamera weist typischerweise eine Vielzahl in einem Gesamtraster angeordneter Sensoreinheiten auf. Jede der Sensoreinheiten kann ein oder mehrere Sensorelemente des Bildsensors aufweisen. Beispielsweise entspricht jede Sensoreinheit einem Bildpunkt (Pixel) eines mittels der Kamera erfassten Messbildes. Die Positionen der Sensoreinheiten und ihrer Sensorelemente innerhalb des Bildsensors sind durch zwei Sensorkoordinaten (XY) der jeweiligen Sensoreinheit definiert.

Jedes der Messbilder umfasst somit ebenfalls eine Vielzahl in einem Gesamtraster angeordneter Bildpunkte (Pixel), die den Sensoreinheiten des Bildsensors zugeordnet sind und deren Positionen innerhalb des jeweiligen Messbildes durch zwei Bildkoordinaten (XY) definiert sind, die den Sensorkoordinaten der jeweiligen Sensoreinheiten typischerweise entsprechen. Die Messbilder beinhalten außerdem Bilddaten, in denen Bildinformationen kodiert sind. In den Bilddaten sind beispielsweise Helligkeitswerte der jeweiligen Bildpunkte der Messbilder kodiert. Die Helligkeitswerte der Bildpunkte der Messbilder sind typischerweise vom Ladungs- oder Entladungszustand von lichtempfindlichen Sen-sorelementen der Sensoreinheiten beim Erfassen des jeweiligen Messbildes abhängig.

Aufgrund der Unterschiedlichkeit der Beleuchtungsbilder enthalten verschiedene Messbilder unterschiedliche Informationen über das Messobjekt. Beispielsweise können sich die Beleuchtungsbilder durch die spektrale Zusammensetzung des Lichts, das bei ihrer Anzeige vom Bildschirm emittiert wird, voneinander unterscheiden. Alternativ oder zusätzlich ist es möglich, dass die Beleuchtungsbilder in unterschiedlichen Bereichen des Bildschirms angeordnet sind, so dass das Messobjekt aus Sicht der Kamera aus unterschiedlichen Richtungen beleuchtet wird.

Somit ist es vorteilhafterweise möglich, aus den jeweils aufgenommenen Messbildern unterschiedliche Informationen über die Reflexionseigenschaften oder andere Eigenschaften des Messobjekts zu gewinnen. Zudem kann der Informationsgehalt der Messbilder durch ein Verändern der Beleuchtungsbildfolge sehr einfach beeinflusst werden.

Ein weiterer wichtiger Vorteil besteht darin, dass das mobile elektronische Gerät beispielsweise ein Smartphone, eine Tablet-Computer ("Tablet"), ein Laptop oder ein ähnlich verbreitetes mobiles elektronisches Gerät sein kann. Vorteilhafterweise ist es für den Nutzer/Konsumenten sehr einfach, ein solches handelsübliches Gerät für die Durchführung des vorgeschlagenen Verfahrens zu konfigurieren, beispielsweise nämlich einfach dadurch, dass der Nutzer/Konsument das vorgeschlagene Computerprogrammprodukt auf das Gerät lädt, beispielsweise von einem App-Store oder von einer Web-Site eines Anbieters des Computerprogrammprodukts, wie oben beschrieben. Somit sind das System und das Verfahren im Vergleich zu vielen herkömmlichen Messgeräten sehr kostengünstig, über die Beleuchtungsbildfolge und die beispielsweise in das mobile Gerät integrierte Auswerteeinheit zur Datenauswertung, wie unten beschrieben, sehr variabel konfigurierbar und zudem für viele Nutzer intuitiv anwendbar bzw. durchführbar. Ein weiterer Vorteil gegenüber bekannten Systemen ist, dass das mobile elektronische Gerät nicht mit weiterer (externe) optischer Hardware nachgerüstet werden muss, weder zur Erzeugung eines dispergierenden optischen Effektes, noch zur Steuerung / Kontrolle der spezifischen Parameter der Beleuchtung und/oder der Bildaufnahme. Das hier beschriebene Verfahren kann also vorteilhafterweise durchgeführt werden, ohne das Gerät hierfür mit weiteren optischen oder elektronischen Komponenten nachrüsten zu müssen. Insbesondere ist es nicht erforderlich, für das Verfahren das mobile Gerät mit zusätzlichen Komponenten wie beispielsweise Filter, Linsen, Spiegel, Blenden, Abschirmungen, Lichtquellen, Sensoren etc. nachzurüsten oder derartige Komponenten während der Durchführung des Verfahrens zwischen dem mobilen Gerät und dem Messobjekt anzuordnen.

Vor der Aufnahme der Messbilder kann vorgesehen sein, dass Vorverarbeitungsschritte, die durch die Kamera automatisch durchgeführt werden können, ausgeschaltet oder deaktiviert werden. Beispielsweise kann vorgesehen sein, dass eine durch die Kamera automatisch vorgenommene Einstellung einer Farbtemperatur der aufgenommenen Bilder ausgeschaltet wird oder dass die Farbtemperatur beispielsweise auf einen festen Wert gesetzt und anschließend bei der Auswertung der Messbilder berücksichtigt wird. Entsprechendes gilt für automatische Einstellungen anderer Aufnahmeparameter der Kamera, wie beispielsweise Empfindlichkeit, Belichtungszeit und Weißabgleich.

Entsprechend kann vorgesehen sein, dass eine automatische Helligkeitsregelung des Bildschirms (durch die Steuereinheit) abgeschaltet und die Beleuchtung beispielsweise auf die höchstmögliche Helligkeit gesetzt wird.

Der Bildschirm des mobilen elektronischen Geräts emittiert Licht in der Regel hauptsächlich oder ausschließlich im sichtbaren Spektralbereich, also Licht mit den Wellenlängen zwischen etwa 400 nm und etwa 800 nm. Typischerweise ist der Bildschirm ein Farbbildschirm und somit zur Anzeige von Farbbildern eingerichtet. Beispielsweise weist der Bildschirm mehrere Farbkanäle auf. In jedem der Farbkanäle weist der Bildschirm eine kanalspezifische spektrale Emissionscharakteristik auf, welche im Folgenden auch als $D_d(\lambda)$ bezeichnet wird. Das in einem Farbkanal emittierte Licht weist somit eine für diesen Farbkanal vordefinierte spektrale Intensitätsverteilung auf und entspricht einer mit dem Bildschirm darstellbaren Grundfarbe des Bildschirms. Beispielsweise kann der Bildschirm einen roten Farbkanal, einen blauen Farbkanal und einen grünen Farbkanal aufweisen. Die Farben der Farbkanäle, also beispielsweise rot, grün und blau, stellen dann die Grundfarben des Bildschirms dar. Der Bildschirm und die Kameras sind typischerweise an das menschliche Sehsystem angepasst. Sichtbares Licht mit Wellenlängen bis ca. 485 nm wird als blau, von ca. 500 nm bis ca. 550 nm als grün und ab ca. 630 nm als rot wahrgenommen wird. Entsprechend emittiert der rote Farbkanal (hauptsächlich) in einem roten Wellenlängenbereich, der grüne Farbkanal (hauptsächlich) in einem grünen Wellenlängenbereich und der blaue Farbkanal des Bildschirms Licht (hauptsächlich) in einem grünen Wellenlängenbereich.

Der Bildschirm weist typischerweise eine Vielzahl in einem Gesamtraster des Bildschirms angeordneter Leuchtelemente auf, welche Bildpunkte (Pixel) des Bildschirms bilden und zusammen eine Gesamtbildfläche des Bildschirms befüllen. Jeder der Farbkanäle ist dann durch eine Teilmenge der Leuchtelemente des Bildschirms gebildet ist, deren spektralen Emissionscharakteristika mit der kanalspezifischen spektralen Emissionscharakteristik des jeweiligen Farbkanals übereinstimmen. Jeder Bildpunkt des Bildschirms wird beispielsweise durch eine Gruppe benachbarter Leuchtelemente gebildet, die den unterschiedlichen Farbkanälen angehören. Die zu einem gemeinsamen Bildpunkt gehörigen Leuchtelemente verschiedener Farbkanäle werden auch als Subpixel des Bildschirms bezeichnet. Die Leuchtelemente jedes Farbkanals sind jeweils in einem Raster angeordnet. Die Raster der Farbkanäle überlagern sich räumlich gegenseitig und bilden so das Gesamtraster der Bildpunkte des Bildschirms.

Typischerweise handelt es sich bei der Kamera des mobilen elektronischen Geräts um eine Farbkamera, die also für Licht mit den Wellenlängen zwischen etwa 400 nm und etwa 800 nm empfindlich ist und mehrere verschiedene Farbkanäle aufweist. Für jeden der Farbkanäle weist die Kamera typischerweise eine kanalspezifische spektrale Empfindlichkeit auf, welche im Folgenden auch als $C_c(\lambda)$ bezeichnet wird. Beispielsweise kann die Kamera einen roten Farbkanal, einen blauen Farbkanal und einen grünen Farbkanal aufweisen. In vielen Fällen stimmen die Wellenlängenbereich der Farbkanäle der Kamera mit denen Farbkanäle des Bildschirms paarweise weitgehend (typischerweise aber nicht vollständig) überein.

Jeder der Farbkanäle der Kamera ist durch eine Teilmenge von Sensorelementen des Bildsensors gebildet, deren spektralen Empfindlichkeiten mit der kanalspezifischen spektralen Empfindlichkeit des jeweiligen Farbkanals der Kamera übereinstimmen. Jede Sensoreinheit des Bildsensors der Kamera wird beispielsweise durch eine Gruppe benachbarter Sensorelemente des Bildsensors gebildet, die den unterschiedlichen Farbkanälen der Kamera angehören. Die Sensorelemente jedes Farbkanals sind somit jeweils in einem Teilraster angeordnet, dass sich über den Bildsensor erstreckt. Die Teilraster der Sensorelemente der verschiedenen Farbkanäle überlagern sich räumlich gegenseitig und bilden so das Gesamtraster der Sensoreinheiten des Bildsensors. Beispielsweise sind die Sensorelemente des roten Farbkanals am empfindlichsten für rotes Licht, die Sensorelemente des grünen Farbkanals am empfindlichsten für grünes Licht und die Sensorelemente des blauen Farbkanals am empfindlichsten für blaues Licht. Rotes Licht hat beispielsweise eine Wellenlänge von etwa 605 nm oder mehr, grünes Licht eine Wellenlänge von etwa 555 nm und blaues Licht von etwa 450 nm oder mehr. Weitere Beispiele für Wellenlängenbereiche für die verschiedenen Farben sind oben angegeben.

Beispielsweise ist die Steuereinheit des mobilen elektronischen Geräts eingerichtet, den Bildschirm des mobilen elektronischen Geräts anzusteuern, eines oder mehrere oder jedes der Beleuchtungsbilder der vordefinierten Beleuchtungsbildfolge anzuzeigen

- durch ein Aktivieren der Leuchtelemente nur eines einzigen Farbkanals des Bildschirms und durch ein Ansteuern aller aktivierten Leuchtelemente dieses Farbkanals mit einem für diesen Farbkanal vordefinierten einheitlichen Helligkeitswert, oder
- durch ein Aktivieren der Leuchtelemente mehrerer Farbkanäle und durch ein Ansteuern aller aktivierten Leuchtelemente mit einem für den jeweiligen Farbkanal vordefinierten einheitlichen Helligkeitswert, oder
- durch das Ersetzen der o.g. einheitlichen Helligkeitswerte durch einen Gradienten. Statt mit einem einheitlichen Helligkeitswert können die aktivierten Leuchtelemente eines gegebenen Farbkanals beispielsweise mit unterschiedlichen Helligkeitswerten angesteuert werden, die sich gemäß einem für diesen Farbkanal vorgegebenen Gradienten voneinander unterscheiden. Der Gradient des jeweiligen Farbkanals kann beispielsweise ein vordefinierter Vektor sein, der beispielsweise über den gesamten Bildschirm hinweg einheitlich (also konstant) sein kann. Die Helligkeitswerte der Leuchtelemente dieses Farbkanals nehmen dann entlang der Richtung des Gradientenvektors entsprechend dem Betrag des Gradientenvektors gleichmäßig zu (oder nehmen alternativ gleichmäßig ab).

Das Aktivieren der Leuchtelemente eines Farbkanals kann beispielsweise durch ein Einschalten dieser Leuchtelemente erfolgen oder durch ein Ansteuern mit einem einheitlichen Helligkeitswert, der größer als ein kleinstmöglicher Helligkeitswert der Leuchtelemente ist. Um eine möglichst helle Beleuchtung des Messobjekts mittels der aktivierten Leuchtelemente zu erzielen, entspricht der jeweilige einheitliche Helligkeitswert vorzugsweise einem maximal möglichen Helligkeitswert der Leuchtelemente.

Entsprechend können die jeweils nicht-aktivierten Leuchtelemente der übrigen Farbkanäle ausgeschaltet werden oder ausgeschaltet bleiben oder jeweils mit einem kleinstmöglichen Helligkeitswert angesteuert werden.

Durch die Ansteuerung mit einem einheitlichen Helligkeitswert wird erreicht, dass das jeweilige Beleuchtungsbild eine einheitliche Farbe hat, dass also jeder Bildpunkt des Bildschirms in dieser einheitlichen Farbe leuchtet oder, falls das Beleuchtungsbild nicht den gesamten Bildschirm, also die Gesamtbildfläche des Bildschirms, ausfüllt, ausgeschaltet ist oder nur mit der kleinstmöglichen Helligkeit leuchtet. Auf diese Weise kann mit dem Bildschirm das Messobjekt räumlich homogen mit Licht einer definierten spektralen Intensitätsverteilung beleuchtet werden.

Falls beispielsweise nur ein einziger Farbkanal des Bildschirms aktiviert ist, leuchtet der Bildschirm einheitlich in der jeweiligen Grundfarbe des Bildschirms, zum Beispiel in rot, grün oder blau. Beispielsweise kann die Beleuchtungsabfolge ein rotes Beleuchtungsbild, ein grünes Beleuchtungsbild und ein blaues Beleuchtungsbild umfassen oder nur eines oder nur zwei dieser Beleuchtungsbilder. Die Steuereinheit ist beispielsweise dazu eingerichtet, den Bildschirm anzusteuern,

- das rote Beleuchtungsbild anzuzeigen durch ein Aktivieren der Leuchtelemente nur des roten Farbkanals des Bildschirms und durch ein Ansteuern aller aktivierten Leuchtelemente des roten Farbkanals mit einem für den roten Farbkanal vordefinierten einheitlichen Helligkeitswert,
- das grüne Beleuchtungsbild anzuzeigen durch ein Aktivieren der Leuchtelemente nur des grünen Farbkanals des Bildschirms und durch ein Ansteuern aller aktivierten Leuchtelemente des grünen Farbkanals mit einem für den grünen Farbkanal vordefinierten einheitlichen Helligkeitswert, und/oder
- das blaue Beleuchtungsbild anzuzeigen durch ein Aktivieren der Leuchtelemente nur des blauen Farbkanals des Bildschirms und durch ein Ansteuern aller aktivierten Leuchtelemente des blauen Farbkanals mit einem für den blauen Farbkanal vordefinierten einheitlichen Helligkeitswert. Die Reihenfolge der Beleuchtungsbilder kann beliebig vorgegeben sein.

Durch Aktivieren mehrerer Farbkanäle gleichzeitig können einheitliche Mischungen der Grundfarben des Bildschirms erzeugt werden. Eines der Beleuchtungsbilder kann beispielsweise ein weißes Beleuchtungsbild (im Folgenden auch als Weißbild bezeichnet) sein, bei dem alle Leuchtelemente des Bildschirms aktiviert und mit dem größtmöglichen Helligkeitswert angesteuert werden. Ein weiteres Beleuchtungsbild kann beispielsweise ein schwarzes Beleuchtungsbild (im Folgenden auch als Schwarzbild bezeichnet) sein, bei dem alle Leuchtelemente des Bildschirms ausgeschaltet oder deaktiviert sind oder mit dem kleinstmöglichen Helligkeitswert angesteuert werden. Das weiße Beleuchtungsbild und das schwarze Beleuchtungsbild können beispielsweise zur Kalibrierung der übrigen Messbilder und zur Abschätzung von Umgebungslichteinflüssen verwendet werden. Die auf bestimmten Maximal- und Minimalhelligkeiten beruhende Kalibration zur Berücksichtigung von Umgebungslichteinflüssen kann beispielweise über eine lineare Funktion (Verschiebung und Skalierung) erreicht werden. Sie kann auch über eine nichtlineare Funktion erreicht werden, beispielsweise um dunkle Bereiche im Bild anzuheben oder helle Bereiche im Bild abzusenken.

Zur Definition der Beleuchtungsbilder können beispielsweise einer oder mehrere der folgenden Beleuchtungsparameter verwendet werden:

- spektrale Zusammensetzung des von dem Bildschirm beim Anzeigen des jeweiligen Beleuchtungsbildes emittierten Lichts, und/oder
- für jeden Farbkanal des Bildschirms jeweils ein einheitlicher Helligkeitswert, und/oder
- ein Bildschirmbereich, der durch das jeweilige Beleuchtungsbild ausgefüllt ist, insbesondere die Größe und Form des Bildschirmbereichs, und/oder
- eine Anordnung eines Bildschirmbereichs, der durch das jeweilige Beleuchtungsbild ausgefüllt ist, innerhalb der Gesamtbildfläche des Bildschirms.

Jedes der Beleuchtungsbilder ist typischerweise zusammenhängend. Beispielsweise kann eines, mehrere oder jedes der Beleuchtungsbilder die Gesamtbildfläche des Bildschirms jeweils vollständig ausfüllen. Es ist aber auch möglich, dass eines, mehrere oder jedes der Beleuchtungsbilder jeweils nur einen Teilbereich der Gesamtbildfläche des Bildschirms ausfüllen, wobei der Bildschirm außerhalb des vom Beleuchtungsbild ausgefüllten Teilbereichs typischerweise schwarz ist (d.h. Leuchtelemente sind ausgeschaltet oder nicht aktiviert, leuchten also nicht oder nur mit der kleinstmöglichen Helligkeit). Der von den Beleuchtungsbildern jeweils ausgefüllte Bildschirmbereich entspricht beispielsweise mindestens 1/6, 1/5, 1/4, 1/3, 1/2 oder mehr der Gesamtbildfläche des Bildschirms. Beispielsweise kann die Beleuchtungsbildfolge R Beleuchtungsbilder umfassen, die jeweils etwa nur $1/R$-tel der Gesamtbildfläche des Bildschirms ausfüllen, wobei R beispielsweise eine natürliche Zahl ist, die größer 2 und beispielsweise kleiner als 20 ist. Typischerweise liegt sie zwischen 3 und 10. Beispielsweise ist also R = 3, 4, 5 oder 6. Typischerweise überlappen die jeweils ausgefüllten Teilbereiche der Beleuchtungsbilder sich auf dem Bildschirm nicht gegenseitig.

Die ausgefüllten Teilbereiche der Beleuchtungsbilder können an einer gleichen Stelle innerhalb der Gesamtbildfläche des Bildschirms angeordnet sein. Typischerweise unterscheiden sich die Beleuchtungsbilder dann aber zumindest in ihrer Farbe voneinander. Alternativ ist es möglich, dass sich die Beleuchtungsbilder nicht nur in ihrer Farbe unterscheiden, sondern auch in ihrer Anordnung auf dem Bildschirm. Außerdem ist es möglich, dass sich die Beleuchtungsbilder nicht in ihrer Farbe unterscheiden, sondern nur in ihrer Anordnung auf dem Bildschirm.

Beispielsweise kann der Bildinhalt eines jeden Beleuchtungsbildes jeweils eine einfarbig ausgefüllte Fläche sein (welche den genannten Teilbereich typischerweise vollständig ausfüllt), wobei die Farbe beispielsweise eine der Grundfarben (z.B. rot, grün oder blau) des Bildschirms sein kann oder weiß (alle Farbkanäle mit gleicher, vorzugsweiser maximaler Helligkeit), wie oben beschrieben wurde.

Haben die Beleuchtungsbilder die gleiche Farbe und unterscheiden sie sich nur in ihrer Position auf dem Bildschirm, so handelt es sich bei den Beleuchtungsbildern typischerweise jeweils um einfarbig ausgefüllte Flächen (welche die jeweiligen Teilbereiche vollständig ausfüllen), wobei die Farbe beispielsweise jeweils die gleiche Grundfarbe (z.B. rot, grün oder blau) des Bildschirms oder weiß (alle Farbkanäle mit gleicher, vorzugsweiser maximaler Helligkeit) ist.

Beispielsweise kann die Gesamtbildfläche des Bildschirms einen oberen Rand, einen unteren Rand, einen linken Rand und einen rechten Rand aufweisen, wobei sich die ausgefüllten Teilbereiche der Beleuchtungsbilder in ihrem Abstand von dem oberen Rand der Gesamtbildfläche des Bildschirms voneinander unterscheiden, wobei das Objektiv oberhalb des oberen Rands der Gesamtbildfläche des Bildschirms angeordnet ist.

Beispielsweise kann die Beleuchtungsbildfolge mittels eines oder mehrerer folgender weiterer Beleuchtungsparameter definiert sein:

- Gesamtzahl der Beleuchtungsbilder,
- Reihenfolge der Beleuchtungsbilder,
- Anzeigedauer der Beleuchtungsbilder,
- zeitlicher Abstand zwischen dem Anzeigen der einzelnen Beleuchtungsbilder.

Die Gesamtzahl der Beleuchtungsbilder ergibt sich beispielsweise aus der Anzahl der Farbkanäle der Kamera und des Bildschirms. Haben beide beispielsweise drei einander entsprechende Farbkanäle (beispielsweise rot, grün und blau), so kann die Beleuchtungsbildfolge zumindest drei Beleuchtungsbilder beinhalten, nämlich eines für jeden Farbkanal (rot, grün und blau). Zusätzlich kann die Beleuchtungsbildfolge das oben beschriebene Weißbild und das Schwarzbild beinhalten, so dass die Beleuchtungsbildfolge dann beispielsweise (zumindest) fünf Beleuchtungsbilder beinhaltet. Die Reihenfolge kann beispielsweise beliebig festgelegt sein. Die Anzeigedauer ist zumindest so lang gewählt, dass der Bildsensor beim Aufnehmen der Messbilder ausreichend belichtet werden kann. Die Anzeigedauer liegt typischerweise in einem Bereich zwischen 10 ms und 500 ms, vorzugsweise in einem Bereich zwischen 100 ms und 200 ms. Die Beleuchtungsbilder werden typischerweise zeitlich nacheinander und nicht gleichzeitig angezeigt. Der zeitliche Abstand zwischen dem Anzeigen der einzelnen Beleuchtungsbilder liegt typischerweise in einem Bereich zwischen 1 ms und 20 ms, vorzugsweise in einem Bereich zwischen 5 ms und 10 ms. Eine Gesamtdauer zum Erfassen der Messbilder liegt somit typischerweise in einem Bereich zwischen 60 ms und 3000 ms.

Jedes der aufgenommenen Messbilder beinhaltet eine Vielzahl von Bildpunkten sowie Bilddaten, die den jeweiligen Bildpunkten zugeordnet sind. Wie oben beschrieben worden ist, kann das System eine Auswerteeinheit umfassen, welche Teil des Geräts (beispielsweise als logische oder integrierte Einheit des Prozessors des Geräts) oder Teil einer anderen Komponente des Systems (beispielsweise als logische oder integrierte Einheit des Prozessors dieser jeweiligen Komponente), beispielsweise eines Computerservers sein kann.

Die Auswerteeinheit ist eingerichtet, beispielsweise mittels des Computerprogrammprodukts, die Bildpunkte der Messbilder zusammenzuführen und die Bilddaten zusammengeführter Bildpunkte zu Messdatensätzen der jeweiligen zusammengeführten Bildpunkte zusammenzufassen. Die Zusammenführung der Bildpunkte erfolgt mittels einer Bildregistrierung der Messbilder. Die zusammengeführten Bildpunkte bilden dann ein einzelnes registriertes Messbild, die Bildpunkte des registrierten Messbildes beinhalten die jeweils zugeordneten Messdatensätze.

Die weitere Verarbeitung der aufgenommenen Bilddaten erfolgt vorzugsweise unter Verwendung dieser Messdatensätze. Anstelle einer einzelnen, sequentiellen Auswertung der einzelnen Messbilder kann durch die Verwendung der beschriebenen Messdatensätze die Auswertung über alle Messbilder hinweg und somit für alle Messbilder gleichzeitig erfolgen. Die aus den Bilddaten der Messbilder gewonnenen Messdatensätze stellen beispielsweise (hyper-) spektrale Datensätze dar (weiter unten auch als spektrale Fingerabdrücke bezeichnet), die jeweils einer gemeinsamen Ortsposition in den Messbildern zugeordnet sind und welche die Messdaten mehrerer oder aller Messbilder die während einer Beleuchtungsbildfolge aufgenommen worden sind, beinhalten. Durch die Verwendung der vorgeschlagenen Messdatensätze ist es möglich, die Messdaten ortsaufgelöst zu verarbeiten (indem die Messdatensätze der zusammengeführten Bildunkte jeweils einzeln abgearbeitet werden). Jeder Messdatensatz kann dabei als eine von den übrigen Messdatensätzen unabhängige Messung aufgefasst werden, welche von den lokalen Eigenschaften des Objektes in dem durch den Messdatensatz jeweils abgebildeten Objektbereich abhängt. Je nach Auflösung der Kamera kann somit durch die einmalige Durchführung des vorgeschlagenen Messverfahrens eine große Anzahl von unabhängigen Messungen erzeugt werden, die jeweils durch einen der Messdatensätze repräsentiert werden. Aufgrund der Vielzahl der bei jeder Messung erzeugten Messdatensätze eignen sich die Messdatensätze insbesondere als Lerndaten zum Trainieren von Algorithmen des maschinellen Lernens, wie beispielsweise von Klassifikationsverfahren, beispielsweise von künstlichen neuronalen Netzwerken. Entsprechend eignen sich die Messdatensätze ebenso gut auch für die Auswertung durch derartige Algorithmen. Vorzugsweise ist die Auswerteeinheit eingerichtet, die Messdatensätze mittels eines Algorithmus auszuwerten, der mittels eines Verfahrens des maschinellen Lernens trainiert bzw. trainierbar, wie beispielsweise ein Klassifikationsverfahren, beispielsweise ein künstliches neuronales Netzwerk. Dadurch, dass die Beleuchtungsbildfolge vordefiniert ist, ist auf entsprechende Weise auch das Datenformat der Messdatensätze vordefiniert. Insbesondere kann durch die Definition der Beleuchtungsbildfolge beispielsweise vorab festgelegt werden, welche Komponenten der Messdatensätze zu welchem Beleuchtungsbild (und somit beispielsweise zu welchem Wellenlängenbereich) gehören. Eine solche feste Zuordnung erleichtert die weitere Verarbeitung der Messdatensätze mittels vorgegebener Auswertungsalgorithmen bzw. kalibrierter Modelle, die typischerweise ein bestimmtes Datenformat erfordern oder zur Verarbeitung eines bestimmten Datenformats programmiert sind.

Für die Bildregistrierung der Messbilder sind typischerweise Bildtransformationen der Messbilder erforderlich, z.B. (lokale) Koordinatentransformationen (Drehungen, Verschiebungen, Verkippung und/oder (lokale) Reskalierungen, Subpixelinterpolation), um Relativbewegungen zwischen dem Gerät und dem Messobjekt während der Aufnahme der Messbilder zu kompensieren bzw. herauszurechnen. Im Idealfall besteht eine 1:1-Korrepondenz zwischen den Bildpunkten der Messbilder, typischerweise aber eine 1:X-Korrespondenz, wobei $X \neq 1$. Bei $X \neq 1$ werden die Messwerte der zusammengeführten Bildpunkte typischerweise interpoliert oder gemittelt, um die Messdatensätze zu ermitteln.

Auf der Grundlage der Messbilder, genauer gesagt auf der Grundlage des registrierten Messbildes, wird ein Objekterkennungsalgorithmus durchgeführt, um in dem Messbild bzw. in dem registrierten Messbild solche Bildpunkte zu erkennen, die das Messobjekt abbilden. Diese Bildpunkte werden im Folgenden als Objektbildpunkte bezeichnet. Jeder dieser erkannten Objektbildpunkte bildet in dem Messbild bzw. in dem registrierten Messbild einen Teilbereich auf der Oberfläche des Objektes ab. Diese Teilbereiche werden nachfolgend als Objektpunkte bezeichnet. Der Objekterkennungsalgorithmus beinhaltet einen "Region growing"-Algorithmus. Zu Beginn dieses Algorithmus wird ein erster Bildpunkt definiert, von dem angenommen wird, dass er ein Objektbildpunkt ist. Als erster Bildpunkt kann beispielsweise ein Bildpunkt in der Mitte eines der Messbilder oder des registrierten Messbildes definiert werden. Alternativ kann der erste Bildpunkt auch durch den Nutzer über die Benutzerschnittstelle definiert werden. Beispielsweise durch Markieren eines Bereichs auf einem mit dem Bildschirm angezeigten Messbildes oder angezeigten registrierten Messbildes, insbesondere wenn der Bildschirm als Touchscreen ausgestaltet ist. Anschließend wird geprüft, wie stark die Messdatensätze benachbarter Bildpunkte von dem Messdatensatz des ersten Bildpunktes abweichen. Nur bei einer ausreichend geringen Abweichung wird ein benachbarter Bildpunkt ebenfalls als ein Objektbildpunkt klassifiziert. Dieser Algorithmus wird (ausgehend von den jeweils als neu klassifizierten Objektpunkten) solange fortgesetzt bzw. iteriert, bis keine weiteren Bildpunkte als Objektpunkte klassifiziert werden.

Weisen der Bildschirm und die Kamera mehrere Farbkanäle auf und unterscheiden sich die Beleuchtungsbilder in ihrer Farbe, wie oben beschrieben wurde, kann jeder der Messdatensätze beispielsweise ein sogenannter "spektraler Fingerabdruck" des Messobjekts in dem zugehörigen Objektpunkt des Messobjekts sein. Weist der Bildschirm beispielsweise M Farbkanäle und die Kamera beispielsweise N Farbkanäle auf, so kann jeder der Messdatensätze beispielsweise $M \times N$ Messwerte oder mehr umfassten. Beispielsweise kann für jeden Farbkanal des Bildschirms ein Beleuchtungsbild angezeigt und für jedes dieser Beleuchtungsbilder ein Messbild aufgenommen werden, wobei die in den einzelnen Farbkanälen der Kamera gemessenen Helligkeitswerte als einzelne Messwerte in den Messdatensätzen enthalten sind. Die (ersten) $M \times N$ Messwerte des Messdatensatzes eines Objektpunktes entsprechen dabei beispielsweise den verschiedenen möglichen Kombinationen der Farbkanäle des Bildschirms mit den Farbkanälen der Kamera. Beispielsweise kann M = 3 und N=3 sein, wenn Kamera und Bildschirm jeweils die Farbkanäle rot, grün und blau aufweisen. Werden zusätzlich noch das oben beschriebene Weißbild und das Schwarzbild angezeigt und jeweils ein Messbild aufgenommen, kann jeder Messdatensatz (M + 2) x N Messwerte umfassen.

Der zu einem Objektpunkt des Messobjekts bzw. zu dessen Objektbildpunkt gehörige Messdatensatz wird im Folgenden auch mit F(d, c) bezeichnet, wenn die Kamera und der Bildschirm jeweils mehrere Farbkanäle aufweisen. Der Index d bezeichnet die Farben der Beleuchtungsbilder (oder die Farbkanäle des Bildschirms) und kann beispielsweise numerisch definiert sein und gemäß den obigen Beispielen beispielsweise $1 \leq d \leq M$ oder $1 \leq d \leq M+2$ erfüllen, beispielsweise mit M=3. Alternativ kann der Index d auch durch entsprechende Buchstaben definiert sein und gemäß den obigen Beispielen beispielsweise d = {r, g, b} oder d = {r, g, b, w, s} erfüllen, wobei r, g, b für den roten, grün bzw. blauen Farbkanal des Bildschirms oder das jeweilige rote, grüne bzw. blaue Beleuchtungsbild stehen und w für das Weißbild und s für das Schwarzbild. Entsprechend kann auch der Index c, der für die Farbkanäle der Kamera steht, numerisch definiert sein und gemäß den obigen Beispielen beispielsweise $1 \leq c \leq N$ erfüllen, beispielsweise mit N=3. Alternativ kann auch der Index c durch entsprechende Buchstaben definiert sein und gemäß den obigen Beispielen beispielsweise c = {r, g, b} erfüllen, wobei r, g, b für den roten, grün bzw. blauen Farbkanal der Kamera stehen. Beispielsweise können die in einem Messdatensatz enthaltenen Messdaten in Form einer Tabelle dargestellt werden. Für d = {r, g, b, w, s} und c = {r, g, b} beispielsweise als

Tabelle 1: Beispiel für Komponenten eines Messdatensatz F(d, c) für einen Objektpunkt eines Messobjekts.

| | | Farben der Beleuchtungsbilder, d (Farbkanäle des Bildschirm) | | | | |
|---|---|---|---|---|---|---|
| | | r | g | b | s | w |
| Farbkanäle | r | F(r,r) | F(g,r) | F(b,r) | F(s,r) | F(w,r) |
| der Kamera, c | g | F(r,g) | F(g,g) | F(b,g) | F(s,g) | F(w,g) |
| | b | F(r,b) | F(g,b) | F(b,b) | F(s,b) | F(w,b) |

Beispielsweise enthält F(d, c) den unter der Beleuchtung mit einem Beleuchtungsbild der Grundfarbe d mit einem Sensorelement des Farbkanals c der Kamera gemessenen Helligkeitswert für den jeweiligen Objektpunkt des Messobjekts.

Die Messdatensätze der einzelnen Bildpunkte können aber auch Gesamthelligkeitswerte ohne Farbinformationen sein. Beispielsweise kann der Messdatensatz ein sogenannter "Glanzmessvektor" sein, der im Folgenden auch als G(a) bezeichnet wird, wobei der Index a die einzelnen Beleuchtungsbilder der Beleuchtungsbildfolge repräsentiert.

Beispielsweise können, wie oben beschrieben, R Beleuchtungsbilder vorgesehen sein, welche, wie oben beschrieben, jeweils 1/R-tel der Gesamtbildschirmfläche abdecken und sich gegenseitig typischerweise nicht überschneiden. Sie unterscheiden sich in ihrer Position auf dem Bildschirm und decken zusammengenommen (würden sie gleichzeitig angezeigt werden) den Gesamtbildschirm ab. Die ausgefüllten Teilbereiche der Beleuchtungsbilder unterscheiden sich in ihrem Abstand von dem oberen Rand der Gesamtbildfläche des Bildschirms voneinander, wobei das Objektiv oberhalb des oberen Rands der Gesamtbildfläche des Bildschirms angeordnet ist. Außerdem kann die Beleuchtungsbildfolge das bereits oben beschriebene Weißbild und das Schwarzbild enthalten. Der Index a kann dann beispielsweise numerisch definiert sein und beispielsweise $1 \leq a \leq R$ oder $1 \leq a \leq R+2$ (mit Weißbild und Schwarzbild) erfüllen. Der "Glanzmessvektor" G(a) hat für R=3 beispielsweise die folgenden Komponenten:

Tabelle 2: Beispiel für Komponenten eines Messdatensatz G(a) für einen Objektpunkt eines Messobjekts.

| | Beleuchtungsbilder, a | | | | |
|---|---|---|---|---|---|
| | *1* | *2* | *3* | *4* | *5* |
| *Gesamthelligkeitswert* | G(1) | G(2) | G(3) | G(4) | G(5) |

Typischerweise sind alle Farbkanäle des Bildschirms in den jeweiligen Teilbereichen mit dem größtmöglichen Helligkeitswert angesteuert, so dass diese Beleuchtungsbilder weiß erscheinen. Beispielsweise enthält der Glanzmessvektor G(a) für jeden Index a einen Gesamthelligkeitswert, der unter der Beleuchtung mit dem Beleuchtungsbild mit dem Index a mit allen Sensorelementen der Kamera im jeweiligen Objektbildpunkt gemessen worden ist.

Prinzipiell ist es aber auch möglich, dass die Beleuchtungsbildfolge Beleuchtungsbilder umfasst, die sich sowohl in ihrer spektralen Zusammensetzung bzw. Farbe als auch, wie oben beschrieben, durch die Position a der jeweils ausgefüllten Teilbereiche voneinander unterscheiden. Beispielsweise kann für jede Position a der oben beschriebene spektrale Fingerabdruck F(c,d) erfasst werden, wobei die farbigen Beleuchtungsbilder nur den beschriebenen Teilbereich in dieser Position a ausfüllen. Auf diese Weise lässt sich für jeden Objektpunkt ein Messdatensatz H(c,d,a) erzeugen, der Informationen sowohl über die spektralen Reflexionseigenschaften wie auch über den Glanz des Messobjekts in dem jeweiligen Objektpunkt beinhaltet.

Durch eine Auswertung des Glanzmessvektors G(a) wie auch des Messdatensatzes H(c, d, a) können beispielsweise Rückschlüsse auf die Glanzeigenschaften eines Messobjekts gezogen werden. Als Messobjekt kommen, neben vielen anderen möglichen Beispielen, beispielsweise (menschliche oder tierische) Haare in Frage bzw. eine von vielen nebeneinander liegenden (menschlichen) Haaren gebildete Oberfläche.

Je nach Anzahl der Bildpunkte bzw. Objektbildpunkten in den Messbildern können durch das Aufnehmen der Messbilder während einer Beleuchtungsbildfolge Hunderte, Tausende oder Millionen von Messdatensätzen des Messobjekts erzeugt werden.

Die Auswerteeinheit kann beispielsweise eingerichtet sein, einen, mehrere oder jeden der Messdatensätze, wie beispielsweise den oben beschriebenen spektralen Fingerabdruck F(c, d), den Glanzmessvektor G(a) und/oder den Messdatensatz H(c, d, a), mit mindestens einem vordefinierten Referenzdatensatz zu vergleichen. Ein Ergebnis dieses Vergleichs kann beispielsweise eine Maßzahl sein, welche bemisst, wie stark sich der jeweilige Messdatensatz von dem jeweiligen Referenzdatensatz unterscheidet. Beispielsweise kann der mindestens einen Referenzdatensatz in einem Merkmalsraum definiert sein und die Messdatensätze vor dem Vergleich mittels der Auswerteeinheit zunächst in diesen Merkmalsraum transformiert werden, um anschließend den Vergleich zwischen Messdatensatz und Referenzdatensatz in dem Merkmalsraum durchzuführen.

Bei mehreren Referenzdatensätzen kann ein Ergebnis die Identifikation desjenigen Referenzdatensatzes sein, von dem sich der jeweilige Messdatensatz am wenigsten unterscheidet. Es kann beispielsweise ein Ranking erzeugt werden, wobei derjenige Referenzdatensatz einen umso höheren Rang erhält, je weniger sich der jeweilige Messdatensatz von diesem unterscheidet. Durch die Identifikation des Referenzdatensatzes mit dem höchsten Rang kann mittels der Auswerteeinheit eine Klassifikation des jeweiligen Messdatensatzes erfolgen.

Nach dem Vergleich mehrerer oder aller Messdatensätze mit den (mehreren) Referenzdatensätzen kann derjenige Referenzdatensatz identifiziert werden, der bei dem beschriebenen Ranking am besten abgeschnitten hat, der beispielsweise am häufigsten den obersten Rang erhalten hat und somit einen höchsten Gesamtrang erhält (per "Mehrheitsentscheidung"). Hierdurch kann mittels der Auswerteeinheit eine Klassifikation des Messobjekts als Ganzes erfolgen.

Der identifizierte Referenzdatensatz mit dem höchsten Gesamtrang kann beispielsweise über eine Nutzerschnittstelle, beispielsweise über den Bildschirm des Geräts, als Messergebnis ausgegeben werden. Anstelle des identifizierten Referenzdatensatzes mit dem höchsten Gesamtrang kann auch eine mit diesem Referenzdatensatz korrespondierende Eigenschaft des Messobjekts oder eine korrespondierende Klassifikation des Messobjekts auf entsprechende Weise ausgegeben werden.

Einige Ausführungsbeispiele der Erfindung betreffen die Art der Erhebung und der Speicherung der aufgenommenen Messwerte sowie deren Vergleich mit anwendungsspezifischen Referenzwerten. Im Zuge der anwendungsspezifischen Ausgestaltung der Auswerteeinheit erfolgt in einigen Ausführungsbeispielen beispielsweise keine Erhebung und Speicherung der einzelnen Messdaten oder Messdatensätze (spektrale Signaturen) und deren direkter Vergleich mit entsprechenden Referenzenwerten (spektrale Signaturen) aus einer Datenbank. Beispielsweise kann eine über alle Messwerte durchgeführte kollektive Erhebung und Speicherung charakteristischer Merkmale der aufgenommenen Messwerte erfolgen und beispielsweise ein Vergleich dieser charakteristischen Merkmale mit gleichartig ermittelten charakteristischen Merkmalen der Referenzen über eine anwendungsspezifische Wichtung, beispielsweise in den synaptischen Elementen eines künstlichen neuronalen Netzwerkes oder vergleichbarer Module anderer Verfahren des maschinellen Lernens, wie beispielsweise Klassifikationsverfahren, durchgeführt werden. Die modellbasierte Analyse ist mehr als der einfache Abgleich mit Referenzmustern, sondern Resultat einer für den spezifischen Anwendungsfall durchgeführte, systematischen und umfangreichen Messkampagne, die die erwartete typische Schwankung von Messsignalen in einer Anwendungsdomain abdeckt und ein implizites Modell, welches aus Messwerten eine Entscheidung ableitet, aufbaut.

Die Auswerteeinheit kann eingerichtet sein, den oben beschriebenen Vergleich zwischen den Messdatensätzen und den Referenzdatensätzen mittels eines - entsprechend trainierten bzw. optimierten - künstlichen neuronalen Netzes durchzuführen. Die beschriebene Klassifikation der Messdatensätze und des Messobjekts als Ganzes kann in diesem Fall beispielsweise mittels eines mathematischen Klassifikationsmodells auf Basis dieses künstlichen neuronalen Netzes erfolgen. Das künstliche neuronale Netz kann beispielsweise ein Mehrschichtperzeptron sein, welches beispielsweise zwei Schichten oder mehr als zwei Schichten aufweisen kann, insbesondere verborgene (innere) Schichten.

Beispielsweise erfolgt somit die zur Lösung der Messaufgabe notwendige Abbildung des mathematischen Zusammenhangs zwischen aufgenommenen Messdaten und anwendungsrelevanter Informationen nicht fix anhand der Lösung eines vorgegebenen Gleichungssystems, sondern anwendungsspezifisch anhand eines frei konfigurierbaren und parametrisierbaren Algorithmus, vorzugsweise aus dem Bereich des maschinellen Lernens.

Das künstliche neuronale Netz kann mittels Trainingsfällen trainiert worden sein. Beispielsweise können bei einem überwachten Lernverfahren eine Vielzahl von Trainingsfällen jeweils durch einen Eingangsvektor und einen Ausgangsvektor gegeben sein. Als Eingangsvektoren dienen beispielsweise die oben beschriebenen Messdatensätze von Messbildern eines bekannten Messobjekts, die mit dem vorgeschlagenen Verfahren erzeugt und deren charakteristische Eigenschaften beispielsweise entsprechend des oben beschriebenen Ansatzes ermittelt wurden. Typischerweise sind die charakteristischen Eigenschaften nicht aus einem einzelnen Messdatensatz ableitbar, sondern werden als Verallgemeinerung der Eigenschaften vieler Messdatensätze ermittelt bzw. implizit bestimmt. Als Ausgangsvektoren dienen beispielsweise Messwerte, die unabhängig von den Messbildern gewonnen wurden und die bestimmte, interessierende Eigenschaften des Messobjekts charakterisieren (zum Beispiel chemische Zusammensetzung, Reifegrad, Glanzeigenschaften oder andere interessende Eigenschaften des Messobjekts). Anschließend wird das künstliche neuronale Netz (d.h. dessen Parameter) für diese Trainingsfälle optimiert, beispielsweise mittels einer Fehlerrückführung (Backpropagation). Weitere Details zu derartigen Techniken können beispielsweise den folgenden Lehrbüchern entnommen werden:

R. Rojas: Theorie der neuronalen Netze : Eine systematische Einführung, Springer, 1996

R. Brause: Neuronale Netze: Eine Einführung in die Neuroinformatik, Teubner, 1995

J. Lunze: Künstliche Intelligenz für Ingenieure, Oldenbourg, 2010.

Der vordefinierte mindestens eine Referenzdatensatz kann beispielsweise in einem Datenspeicher gespeichert sein, beispielsweise in dem internen Datenspeicher des mobilen elektronischen Geräts oder einer anderen Komponente des Systems, beispielsweise eines Computerservers oder einer Cloud. Die Auswerteeinheit kann eingerichtet sein, automatisch auf diesen Datenspeicher zuzugreifen und die Referenzdatensätze von dem Datenspeicher abzurufen, um den beschriebenen Vergleich durchführen zu können. Beispielsweise kann die Auswerteinheit eingerichtet sein, die Abfrage der Referenzdatensätze in Abhängigkeit von einer Eingabe über die Nutzerschnittstelle durchzuführen. Beispielsweise kann vorgesehen sein, dass mittels der Nutzerschnittstelle eingegeben wird, welche Art von Messobjekt untersucht werden soll und welche Eigenschaften dieses Messobjekts untersucht werden sollen.

Die Auswerteeinheit kann eingerichtet sein, bei der Auswertung der Messdatensätze die spektrale Empfindlichkeit $C_c(\lambda)$ der Kamera oder die spektrale Emissionscharakteristik $D_d(\lambda)$ des Bildschirms oder beides zu berücksichtigen. (Die Indizes c und d sind definiert wie oben beschrieben.) Auf diese Weise ist es beispielsweise möglich, die Vergleichbarkeit der Messdatensätze, die mittels verschiedener Bildschirme und Kameras gewonnen wurden, zu verbessern, insbesondere die Vergleichbarkeit des oben beschriebenen spektralen Fingerabdrucks $F(d, c)$ oder des Glanzmessvektors $G(a)$. Die spektrale Empfindlichkeit $C_c(\lambda)$ der Kamera und die spektrale Emissionscharakteristik $D_d(\lambda)$ des Bildschirms können beispielsweise mittels eines Spektrometers gemessen werden oder den jeweiligen Herstellerangaben entnommen werden.

Zusätzlich oder alternativ zur oben beschriebenen Auswertung kann die Auswerteeinheit eingerichtet sein, unter Berücksichtigung der spektralen Empfindlichkeit $C_c(\lambda)$ der Kamera und der spektralen Emissionscharakteristik $D_d(\lambda)$ des Bildschirms aus den Messdatensätzen eine Reflexionscharakteristik des Messobjekts zu ermitteln. Bei der genannten Reflexionscharakteristik kann es sich beispielsweise um das Reflexionsspektrum des Messobjekts (in den jeweiligen Objektpunkten) handeln, welche die Abhängigkeit des Reflexionsgrads des Messobjekts (in den jeweiligen Objektpunkten) von der Wellenlänge des Lichts bemisst. Das ermittelte Reflexionsspektrum erlaubt in vielen Fällen Rückschlüsse auf die (bio-)chemische Zusammensetzung des Messobjekts (zumindest auf dessen Oberfläche) oder hiermit korrelierten Eigenschaften des Messobjekts.

Allgemein lässt sich der Zusammenhang zwischen dem gemessenen "spektralen Fingerabdruck" *F(d,* c) des Messobjekts in einem Objektpunkt und dem eigentlich interessierenden (unbekannten) Reflexionsspektrum *S(λ)* des Messobjekts in diesem Objektpunkt mathematisch schreiben als Integral über den gesamten Wellenlängenbereich:

$$F(d,c) = \int D_d(\lambda) C_c(\lambda) S(\lambda) d\lambda \qquad \text{Gleichung (1)}$$

Die spektrale Emissionscharakteristik $D_d(\lambda)$ mit d = {r, g, b, w, s} des Bildschirms und die die spektrale Empfindlichkeit $C_c(\lambda)$ der Kamera c = {r, g, b} sind definiert wie oben beschrieben. Es können spektrale Kanäle $S^k$ als Mittelwerte über den jeweiligen Wellenlängenbereich $[A_k, A_{k+1}]$ zwischen den Wellenlängen $A_k$ und $A_{k+1}$ definiert werden mit $\Delta A = A_{k+1} - A_k$:

$$S^k = \frac{1}{\Delta A} \int_{A_k}^{A_{k+1}} S(\lambda) d\lambda \qquad \text{Gleichung (2)}$$

Die Komponenten des spektralen Fingerabdrucks F(d, c) lassen sich dann näherungsweise als Summe über die spektralen Kanäle $S^k$ auffassen, also als:

$$F(d,c) = \sum_k S^k B_{dc}^k \qquad \text{Gleichung (3)}$$

mit den für das jeweilige Gerät spezifischen Koeffizienten

$$B_{dc}^k = \frac{1}{\Delta A} \int_{A_k}^{A_{k+1}} D_d(\lambda) C_c(\lambda) \, d\lambda \qquad \text{Gleichung (4)}$$

Die spektrale Kanäle $S^k$ sind von den gerätespezifischen Größen $D_d(\lambda)$ und $C_c(\lambda)$ nicht (oder nur relativ schwach) abhängig und eignen sich daher besonders gut für eine gerätetypübergreifende Anwendung. Typischerweise umfassen die spektralen Kanäle $S^k$ den gesamten Wellenlängenbereich des Displays und der Kamera. Bei bekannten gerätespezifischen Größen $D_d(\lambda)$ und $C_c(\lambda)$ ergibt sich bei einer Messung des spektralen Fingerabdrucks $F(d,$ c) ein Gleichungssystem (Gleichung 3) mit den spektralen Kanälen $S^k$ als Unbekannte. Ist das Gleichungssystem hinreichend linear unabhängig, kann es gelöst werden und man erhält die gesuchten spektralen Kanäle $S^k$. Die Anzahl und Lage der spektralen Kanäle $S^k$ können hierfür geeignet gewählt werden. Wird die Anzahl der spektralen Kanäle $S^k$ zu hoch gewählt, ist das Gleichungssystem jedoch nicht mehr ausreichend linear unabhängig. In einigen Anwendungen, beispielsweise mit marktüblichen Smartphones, lässt sich das Gleichungssystem bei einer Anzahl von beispielsweise 5 bis 6 Kanälen $S^k$ in vielen Fällen lösen. Unter Ausnutzung nichtlinearer Effekte lassen sich in manchen Fällen eine höhere Anzahl von Kanälen $S^k$ erzielen. Die mögliche Anzahl und Lage der berechenbaren Kanäle $S^k$ für das jeweilige Gerät hängen in der Regel von den Unterschieden zwischen den gerätespezifischen Größen $D_d(\lambda)$ und $C_c(\lambda)$ und von Rauscheinflüssen ab. In manchen Fällen lassen sich beispielsweise auch 15 Kanäle $S^k$ realisieren.
Das auf die oben beschriebene Weise bestimmte Reflexionsspektrum $S(\lambda)$ ist eine Näherung mit einer begrenzten Genauigkeit. Dennoch lassen sich hiermit nützliche Anwendungen umsetzen.
Alternativ oder zusätzlich zu den spektralen Kanälen $S^k$ kann die genannte Reflexionscharakteristik beispielsweise auch die Abhängigkeit des Reflexionsgrads des Messobjekts (in den jeweiligen Objektpunkten) von dem Einfallwinkel des Lichts auf das Messobjekt (in dem jeweiligen Objektpunkten) sein oder beinhalten. Der winkelabhängige Reflexionsgrad erlaubt in vielen Fällen objektive Rückschlüsse auf den Glanz einer Oberfläche, also auf den Anteil des auf der Oberfläche des Messobjekts gerichtet reflektierten Lichts (im Unterschied zum diffus reflektierten Licht). Beispielsweise kann dieser winkelabhängige Reflexionsgrad auf der Grundlage des oben beschriebenen Glanzmessvektors *G(a)* oder des Messdatensatzes *H(c,d,a)* für jeden Objektpunkt ermittelt oder quantitativ abgeschätzt werden. Bei einer stark glänzenden Oberfläche zeigt der winkelabhängige Reflex der Oberfläche typischerweise ein besonders hohes und schmales Intensitätsmaximum auf, wenn der Austrittswinkel der gemessenen reflektierten Strahlung genau dem Einfallswinkel der eintreffenden Strahlung entspricht. Beispielsweise kann ein Histogramm über die Helligkeiten der einzelnen Pixel berechnet werden. Auf Basis des Histogramms bzw. dessen Eigenschaften kann beispielsweise über Schwellwerte oder eine Analyse des Histogramms eine Maßzahl für die Reflexion bezogen auf den Winkel (entsprechend dem aktuell beleuchteten Teil des Bildschirms) berechnet werden.
Wie bereits zuvor im Zusammenhang mit den Messdatensätzen beschrieben worden ist, insbesondere im Zusammenhang mit dem spektralen Fingerabdruck *F(c, d)*, dem Glanzvektor *G(a)* und dem Messdatensatzes *H(c,d,a)*,

kann die Auswerteeinheit zusätzlich oder alternativ eingerichtet sein, die ermittelten Reflexioncharakteristika des Messobjekts, also beispielsweise die spektralen Kanäle $S^k$ oder die ermittelten Werte für den winkelabhängige Reflexionsgrad, mit mindestens einer vordefinierten Referenzreflexionscharakteristik zu vergleichen.

Zur Erhöhung der Messgenauigkeit vor dem Hintergrund zwar sehr geringer aber dennoch nicht ganz auszuschließender geräteabhängiger Variationen der Eigenschaften insbesondere des Bildschirmes und der Kamera des mobilen Gerätes (z.B. Smartphone), kann beispielsweise eine gerätespezifische Kalibration durchgeführt werden. Hierfür kann beispielsweise eine einmalige oder mehrmalige Messung eines bekannten und sich vorzugsweise durch möglichst geringe Variation seiner stofflichen und somit spektralen Eigenschaften auszeichnenden Kalibrationsnormals mit dem mobilen Gerät (z.B. Smartphone) durchgeführt werden. Für diese Messung wird mit dem mobilen Gerät beispielsweise das hier vorgeschlagene Messverfahren durchgeführt und auf diese Weise die beschriebenen Messbilder des Kalibrationsnormals erzeugt. Anschließend kann ein Vergleich der durch die Messung gewonnenen Messdaten, beispielsweise in Form der oben beschriebenen Messdatensätze, der oben beschriebenen Reflexionscharakteristik oder spektralen Kanäle $S^k$, mit einem beispielsweise in der Auswerteeinheit oder in der internen Datenspeicher des mobilen Geräts gespeicherten entsprechenden Referenzdatensatz dieses Kalibrationsnormals erfolgen. Dieser Referenzdatensatz ist beispielsweise zuvor mit hochpräzisen Verfahren unter Verwendung eines oder mehrerer Kalibrationsnormale ermittelt worden. Beispielsweise können auf der Grundlage eines Vergleichs der Messdaten für die spektralen Kanäle $S^k$ mit entsprechenden Referenzwerten der spektralen Kanäle $S^k$ die Werte für die gerätespezifischen Größen $D_d(\lambda)$ und $C_c(\lambda)$ neu berechnet und für die Verwendung in zukünftigen Messungen gespeichert werden. Beispielsweise kann die Steuereinheit und/oder die Auswerteeinheit des mobilen Geräts eingerichtet sein, die für die Kalibration erforderliche Neuberechnung der Größen $D_d(\lambda)$ und $C_c(\lambda)$ automatisch durchzuführen, beispielsweise in einem zuvor (beispielsweise durch den Nutzer über die Benutzerschnittstelle) aktivierten Kalibrationsmodus des Geräts.

Zur Ausgestaltung des o.g. Kalibrationsnormals können handelsübliche und speziell eingemessene / charakterisierte Kalibrationsnormale, beispielsweise aus spektral besonders konstantem Material (PTFE, Teflon) verwendet werden. Eine weitere Ausgestaltungsmöglichkeit, insbesondere im Hinblick auf die bevorzugte Verwendung durch den Konsumenten und die beabsichtigte Vermeidung zusätzlicher Hardware mit den damit verbundenen Kosten, besteht in der Nutzung allgemein leicht zugänglicher und wenig variierender Objekte mit eigentlich anderem Verwendungszweck, wie beispielsweise Geldscheine, als Kalibrationsnormal.

Geht man davon aus, dass sich die o.g. geräteabhängigen Variationen der Eigenschaften, insbesondere des Bildschirmes und der Kamera, des mobilen Gerätes (z.B. Smartphone) während der üblichen Lebens- bzw. Nutzungsdauer des Gerätes nicht verändern, ist diese gerätespezifische Kalibration typischerweise nur einmalig erforderlich. In Fällen stärkerer geräteabhängiger Variationen der Eigenschaften, insbesondere des Bildschirmes und der Kamera, des mobilen Gerätes (z.B. durch übermäßige Abnutzung) kann diese Kalibration grundsätzlich beliebig häufig wiederholt werden, um der auftretenden Variation Rechnung zu tragen. Durch die vorgeschlagene Kalibration können derartige Variationen reduziert werden. Dies ist besonders vorteilhaft im Fall von Smartphones und vergleichbaren mobilen Geräten für Konsumenten, da sich derartige Geräte häufig im Emissionsverhalten des Displays sowie in der Filtercharackteristik der Farbkamera unterscheiden und sich diese Charakteristika oftmals nur aufwendig mit Messtechnik direkt erfassen lassen.

Für das System, das Verfahren und das Computerprogramm ergeben sich verschiedene Anwendungen, von denen einige exemplarisch und nach Anwendungskomplexen sortiert aufgezählt werden. Aufgelistet werden Beispiele für Messobjekte, Beispiele für möglicherweise interessierende Eigenschaften der jeweiligen Messobjekte sowie Beispiele für Handlungsempfehlungen.

Anwendungskomplex 1:

Mensch - Medizin:

- Hauttyp
- Haartyp
- Hautfarbe
- Verfärbung (Leberflecken, Melanome)
- Wundheilung, Farbe von Entzündungen
- Erkennen, objektives Bewerten und/oder Dokumentieren von Krankheiten (z.B. Stoffwechselerkrankungen, Infektionen, Allergien) und/oder Mangelerscheinungen anhand spezifischer Veränderung von Haut und Haar (bzw. Fell bei Tieren). Darauf aufbauend automatisches oder semi-automatisches (im Sinne eines Assistenzsystems) Ableiten von Handlungsempfehlungen, beispielsweise zur Behandlung der jeweiligen Krankheit, zur Behandlung der Mangelerscheinung, zur Optimierung der Ernährung bzw. zur Optimierung der Pflege von Haut und/oder Haaren (oder Fell bei Tieren). Zur Optimierung der Ernährung oder Pflege können beispielsweise automatisiert oder semi-automatisches (im Sinne eines Assistenzsystems) Pflegeprodukte (wie beispielsweise Lotionen, Shampoo, etc.) oder bestimmte Nahrungsmittel (wie beispielsweise sogenannte "functional foods", Früchte, künstlich hergestellte Nahrungsmittelergänzungsprodukte etc.) oder bestimmte Inhaltsstoffe der Ernährung (z.B. Vitamine, Mineralstoffe etc.) empfohlen werden.

Mensch - Kosmetik (Empfehlung von Pflegeprodukten und Verhaltensweisen):

- Hauttyp, Hautfarbe (allgemein)
- Auswahl Kosmetika
- Auswahl Sonnenschutz
- Auswahl Färbemittel
- Auswahl Pflegemittel
- Hautfarbe (aktuell)
- Bräunungsgrad
- Haarfarbe (aktuell)
- neue Färbung, Tönung nötig?

Haus- und Nutztier:

- Haut, Fell
- Pflegeprodukte
- Gesundheit

Anwendungskomplex 2:

Produktion und Verarbeitung pflanzlicher Produkte:

- Erkennung des Gesundheits- und Ernährungszustandes von Kulturpflanzen in vivo im Feldbestand, Gewächshaus und Labor (alle Arten von biotischem und abiotischem Stress)
- Erkennung von Beikräutern und unerwünschten Pflanzen im Rahmen der landwirtschaftlichen Produktion im Feldbestand
- Bestimmung von Qualitätsparametern von Erntegut direkt bei/nach der Ernte sowie bei der Lagerung, dem Verkauf und der Weiterverarbeitung
- Erkennung von unerwünschten Produkten I Objekten I Verunreinigungen I Pilz- u. Schädlingsbefall im Erntegut direkt bei/nach der Ernte sowie bei der Lagerung, dem Verkauf und der Weiterverarbeitung
- Bestimmung von Qualitätsparametern von Saatgut im Rahmen der Pflanzenzüchtung (Selektion) und der Saatgutproduktion (Qualitätssicherung)

Anwendungskomplex 3:

Bestimmung von Eigenschaften von Textilien, wie Leder, Fell, Stoffe natürlichen oder künstlichen Ursprungs:

- Farbe
- Textur
- Zusammensetzung
- Herkunft
- Alter
- Sauberkeit
- Farbnuancen, Stilberatung (wann passt was zueinander)

Anwendungskomplex 4:

Bestimmung von Eigenschaften von Lebensmitteln (Obst, Gemüse, Fisch, Fleisch, Pilze, Molkereiprodukte, verarbeitete Produkte)

- Haltbarkeit
- Frische, Alter, Reifegrad
- Reinheit, Zusammensetzung
- Sorte
- Verarbeitungsgrad
- Behandlung bzw. Unbehandeltheit.

Bei den beschriebenen Anwendungsbeispielen werden beispielsweise mittels des vorgeschlagenen Systems die Messbilder des jeweils genannten Objektes aufgenommen, welche anschließend mittels des Systems ausgewertet werden. Die jeweils interessierenden Informationen, wie beispielsweise bestimmte Eigenschaften des Objektes oder hiervon ableitbare Informationen, werden durch das System, beispielsweise durch die Auswerteeinheit des mobilen Gerätes, ermittelt. Beispielsweise können anschließend auf der Grundlage der so ermittelten Informationen (aus den ermittelten Eigenschaften des Objektes und/oder aus den hieraus abgeleiteten Informationen) entsprechende Handlungsempfehlungen ermittelt werden. Die ermittelten Informationen und/oder die ermittelten Handlungsempfehlungen können über das mobile Gerät, beispielsweise optisch mittels des Displays des mobilen Geräts und/oder akustisch mittels eines Lautsprechers des mobilen Gerätes, an den Nutzer ausgegeben werden. Beispielsweise kann vorgesehen sein, dass der Nutzer vor der Durchführung der Messung über die Nutzerschnittstelle des mobilen Gerätes eine Eingabe vornimmt, mit der die Art des Messobjekts, die Art der interessierenden Informationen und/oder die Art der interessierenden Handlungsempfehlungen festgelegt werden. Von dieser Eingabe können beispielsweise, wie bereits oben beschrieben worden ist, die Beleuchtungsparameter der Beleuchtungsbildfolge sowie auf die Auswertung der Messbilder abhängig sein.

Mit dem hier vorgeschlagenen System und Verfahren kann ein Nutzer mittels eines allgemein verfügbaren mobilen Gerätes, wie beispielsweise mittels eines Smartphones, auf einfache Weise Messungen an einem Objekt durchführen und Informationen über interessierende Eigenschaften des Objektes sowie ggf. auch Handlungsempfehlungen gewinnen. In vielen der hier beschriebenen Ausführungsbeispielen ist das System bzw. das Verfahren eine Kombination von mobilem Gerät, systematischer Datenerhebung, Maschinenlernen und modellbasierter anwendungsspezifischer Erkennung. Durch diese Kombination ist das System auch in der Lage Expertenwissen (z.B. Wissen eines Arztes) zu lernen, indem das System beispielsweise lernt, welche konkreten Handlungsempfehlungen aus welchen Eigenschaften abgeleitet werden können. Hierdurch kann das System den Nutzer in manchen Fällen vom Experten unabhängig machen und zudem auch in Konstellationen nützlich sein, die vorher noch nicht dagewesen sind.

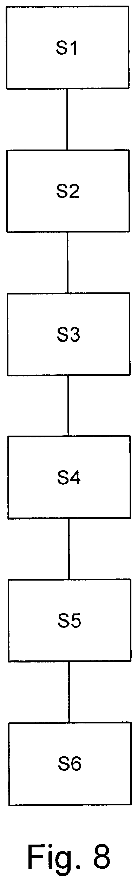

Nachfolgend wird die Erfindung anhand von speziellen Ausführungsbeispielen näher erläutert, welche in den Figuren 1 bis 8 schematisch dargestellt sind. Es zeigt:

Figur 1          ein System hier vorgeschlagener Art,

Figur 2          ein mobiles elektronisches Gerät des in Figur 1 gezeigten Systems,

Fign. 3A-3E    das mobile elektronische Gerät des in Figur 1 gezeigten Systems in einer Ansicht von vorne, jeweils ein unterschiedliches Beleuchtungsbild einer ersten Beleuchtungsbildfolge anzeigend,

Fig. 4          das mobile elektronische Gerät des in Figur 1 gezeigten Systems in einer Seitenansicht, ein Beleuchtungsbild der ersten Beleuchtungsbildfolge anzeigend, und ein Messobjekt

Fign. 5A-5E    das mobile elektronische Gerät des in Figur 1 gezeigten Systems in einer Ansicht von vorne, jeweils ein unterschiedliches Beleuchtungsbild einer zweiten Beleuchtungsbildfolge anzeigend,

Fign. 6A-6C    das mobile elektronische Gerät des in Figur 1 gezeigten Systems in einer Seitenansicht, jeweils ein unterschiedliches Beleuchtungsbild der ersten Beleuchtungsbildfolge anzeigend, und ein Messobjekt,

Figur 7          eine schematische Darstellung mehrerer Messbilder, die mit dem Gerät des in Figur 1 gezeigten Systems von einem Messobjekt erfasst worden sind, und

Figur 8          ein Flussdiagram mit Schritten eines Verfahrens hier vorgeschlagener Art.

Identische oder einander entsprechende Merkmale sind in den Figuren mit den gleichen Bezugszeichen versehen.

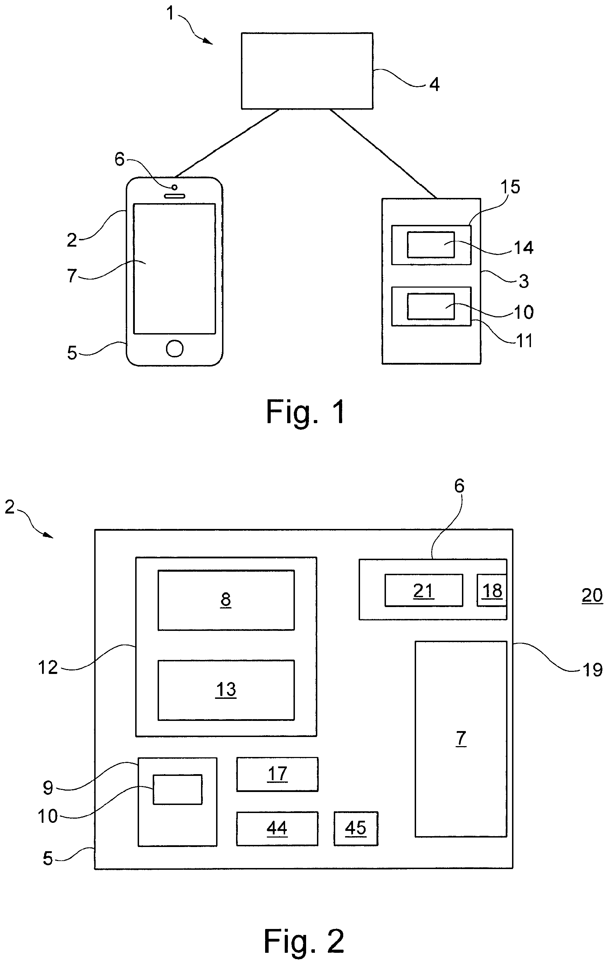

Figur 1 zeigt ein System 1 hier vorgeschlagener Art zum Erfassen und Auswerten von Messbildern eines Messobjekts. Das System 1 umfasst mehrere mobile elektronische Geräte 2, von denen in Figur 1 der Übersichtlichkeit nur eines dargestellt ist. Außerdem umfasst das System 1 in diesem Beispiel außerdem mehrere Computer 3, wie beispielsweise Computerserver oder PCs oder eine Cloud, von denen ebenfalls nur einer gezeigt ist. Die nachfolgende Beschreibung kann sich auf jedes der Geräte 2 bzw. Computer 3 beziehen, obwohl jeweils nur von dem Gerät 2 bzw. dem Computer 3 die Rede ist.

Im gezeigten Beispiel sind das Gerät 2 und der Computer 3 über ein Computernetzwerk 4, beispielsweise über das Internet und/oder eine Cloud, miteinander verbunden. In einer anderen Ausführungsform umfasst das System keine weiteren Computer 3.

Bei dem Gerät 2 kann es sich beispielsweise ein Smartphone handeln, beispielsweise um ein iPhone des Herstellers Apple. Es könnte sich bei dem Gerät 2 aber auch um ein Smartphone eines anderen Herstellers oder um ein anderes mobiles elektronisches Gerät handeln, beispielsweise um einen Tablet-Computer.

Das Gerät umfasst ein Gehäuse 5 und eine in dem Gehäuse 5 integrierte Kamera 6 zum Aufnehmen von Messbildern eines Messobjekts innerhalb eines Beobachtungsbereichs der Kamera 6. Das Gerät umfasst außerdem einen in dem Gehäuse 4 integrierten Bildschirm 7 zum lichtemittierenden Anzeigen von Bildern. Der Bildschirm 7 ist dem Beobachtungsbereich der Kamera 6 zugewandt.

Figur 2 zeigt eine weitere schematisierte Darstellung des Geräts 2, in der einige der Komponenten des Geräts 2 gezeigt sind. Das Gerät 2 umfasst eine in dem Gehäuse integrierte Steuereinheit 8, die eingerichtet ist, den Bildschirm 6 anzusteuern, mehrere verschiedene Beleuchtungsbilder einer vordefinierten Beleuchtungsbildfolge nacheinander anzuzeigen. Die Steuereinheit 8 ist außerdem eingerichtet, die Kamera 6 anzusteuern, synchron zum Anzeigen eines jeden Beleuchtungsbildes der vordefinierten Beleuchtungsbildfolge jeweils ein Messbild von dem Messobjekt zu erfassen.

Das Gerät 2 umfasst einen internen Datenspeicher 9, der in das Gehäuse 4 des Geräts 2 integriert ist. Der interne Datenspeicher 9 umfasst beispielsweise einen volatilen und einen nicht-volatiler Datenspeicher, beispielsweise ein RAM und ein ROM, beispielsweise in Form eines oder mehrerer Halbleiterlaufwerke.

Auf dem Gerät 2 ist ein Computerprogrammprodukt 10 geladen, das Softwarecodeabschnitte umfasst. In den Softwarecodeabschnitten sind Anweisungen enthalten, welche durch die Steuereinheit ausführbar sind. Bei der Ausführung dieser Anweisungen führt die Steuereinheit die oben beschriebene Steuerung des Bildschirms 6 und der Kamera 5 sowie weitere Schritte, die nachfolgende beschrieben werden, aus, wenn das Computerprogrammprodukt auf dem Gerät 2 läuft.

Bei dem Computerprogrammprodukt 9 handelt es sich um ein auf dem Datenspeicher 9 gespeichertes Computerprogramm. Dieses Computerprogramm ist auch auf einem Datenspeicher 11 des Computers 3, beispielsweise einer Festplatte des Computers 3 oder einen Cloudspeicher, gespeichert und ist beispielsweise von dem Computer 3 über das Computernetzwerk 4 auf das Gerät 2 geladen worden.

Die Steuereinheit 8 ist eine (logische oder integrierte) Einheit eines (digitalen) Prozessors 12, zum Beispiel eines Hauptprozessors (CPU) des Geräts 2 in Form eines elektronischen Schaltkreises, der beispielsweise als Halbleiterchip realisiert ist. Der Prozessor 12 ist mit dem Datenspeicher 9 des Geräts 2 verbunden, um auf den Datenspeicher 9 zuzugreifen und insbesondere das in den Datenspeicher 9 geladene Computerprogrammprodukt bzw. dessen geladenen Softwarecodeabschnitte abzurufen und anschließend (als Steuereinheit 8 des Geräts) die oben genannten Schritte (synchrones Ansteuern des Bildschirms 7 und der Kamera 6) sowie weitere nachfolgend beschriebene Schritte auszuführen.

Das Gerät 2 umfasst außerdem eine Auswerteeinheit 13, welche ebenfalls eine (logische oder integrierte) Einheit eines (digitalen) Prozessors 12 ist. Die Auswerteeinheit 13 ist eingerichtet, Verfahrensschritte zur Auswertung der Messbilder durchzuführen. Das Computerprogrammprodukt enthält weitere Softwarecodeabschnitte, in denen entsprechende Anweisungen codiert sind, die mittels des Prozessors 12 des Geräts ausgeführt werden können, so dass der Prozessor 12 bei der Ausführung dieser weiteren Anweisungen als die genannte Auswerteeinheit 13 des Geräts 2 fungiert.

Beispielsweise kann das Verfahren vollständig durch das Gerät 2 durchgeführt werden, um auf diese Weise das übertragene Datenvolumen zu minimieren, um nicht auf eine Datenverbindung angewiesen zu sein und/oder um sensible Daten zu schützen. Prinzipiell ist es zusätzlich oder alternativ auch möglich, dass entsprechende Auswerteschritte beispielsweise mittels des Computers 3 ausgeführt werden. Hierzu kann der Computer (ebenfalls) eine entsprechend eingerichtete Auswerteeinheit 14 umfassen, die beispielsweise eine (logische oder integrierte) Einheit eines Prozessors 15 des Computers 3 sein kann. Es ist auch möglich, dass die Auswertung der Messbilder teilweise durch die Auswerteeinheit 13 des Geräts 2 und teilweise durch die Auswerteeinheit 14 des Computers 3 durchgeführt wird.

Die vordefinierte Beleuchtungsbildfolge ist in diesem Beispiel durch einen Satz von Beleuchtungsparametern, die weiter unter näher beschrieben werden, vollständig definiert. Die Beleuchtungsparameter sind auf dem Datenspeicher 9 des mobilen elektronischen Geräts 2 sowie auf dem Datenspeicher 11 des Computers 3 gespeichert. Beispielsweise enthält der Softwarecode des Computerprogrammprodukts 10 Definitionen und Werte der Beleuchtungsparameter. Beispielsweise ist durch das Laden des Computerprogrammprodukts 10 auf das Gerät 2 eine automatische Speicherung der Beleuchtungsparameter auf dem Datenspeicher 9 des Geräts 2 erfolgt. Bei der Durchführung der oben beschriebenen Verfahrensschritte ruft die Steuereinheit 8 die gespeicherten Beleuchtungsparameter aus dem Datenspeicher 9 des Geräts 2 (oder alternativ aus dem Datenspeicher 11 des Computers) ab, ermittelt anschließend auf der Grundlage der abgerufenen Beleuchtungsparameter die vordefinierte Beleuchtungsbildfolge und steuert anschließend den Bildschirm 7 zum Anzeigen der Beleuchtungsbilder der so ermittelten vordefinierten Beleuchtungsbildfolge an und synchron hierzu die Kamera 6 zum Aufnehmen der Messbilder.

Der Bildschirm 7 des Geräts 2 ist ein Touchscreen, der als eine Benutzerschnittstelle des 16 des Geräts fungiert. Die Benutzerschnittstelle 16 erlaubt insbesondere die Bedienung des Geräts zur Durchführung des vorgeschlagenen Verfahrens. Beispielsweise kann über die Benutzerschnittstelle 16 die vordefinierte Beleuchtungsbildfolge direkt oder indirekt eingestellt werden. Beispielsweise ist mittels der Benutzerschnittstelle 16 eine Auswahl zwischen verschiedenen (gespeicherten) vordefinierten Beleuchtungsbildfolgen ermöglicht. Dies kann beispielsweise dadurch erfolgen, dass mittels der Benutzerschnittstelle 16 die Art des zu untersuchenden Messobjekts eingegeben und eine Auswahl einer oder mehrerer interessierender Eigenschaften des ausgewählten Messobjekts getroffen wird. Von diesen Eingaben abhängig bestimmt die Steuereinheit 8 beispielsweise die Beleuchtungsbilder der Beleuchtungsbildfolge und bestimmt die Auswerteeinheit 13 beispielsweise die Art der Auswertung. Die Benutzerschnittstelle umfasst beispielsweise außerdem eine akustische Ausgabe des Geräts 2, beispielsweise in Form eines eingebauten Lautsprechers, und/oder ein Vibrationsmodul, beispielsweise zur Erzeugung von Warnsignalen, beispielsweise wenn Umgebungslichteinflüsse als zu groß beurteilt werden oder falls eine durchgeführte Bildregistrierung der Messbilder oder eine Objekterkennung, beispielsweise aufgrund der Objekteigenschaften oder des Benutzerverhaltens nicht erfolgreich durchgeführt werden konnte.

Der Datenspeicher 9 des Geräts 2 ist zum Speichern der aufgenommenen Messbilder eingerichtet. Hierzu überträgt die Steuereinheit 8 die aufgenommenen Messbilder auf den Datenspeicher 9 und initiiert die Speicherung. Beispielsweise kann die Auswerteeinheit 13 des Geräts auf die in dem Datenspeicher 9 gespeicherten Messbilder zugreifen, um die Auswertung durchzuführen. Außerdem kann die Steuereinheit 8 den Bildschirm 7 beispielsweise ansteuern, eines oder mehrere der aufgenommenen Messbilder automatisch nach dem Aufnehmen der Messbilder anzuzeigen. Prinzipiell ist es zusätzlich oder alternativ auch möglich, dass die Messbilder auf den Computer 3 übertragen, dort im Datenspeicher 11 gespeichert und mittels der Auswerteeinheit 14 ausgewertet werden.

Auf dem Datenspeicher 9 des Geräts 2 ist außerdem ein Betriebssystem des Geräts 2 installiert, wie beispielsweise iOS, sowie weitere Anwendungsprogramme, insbesondere ein Internetbrowser und eine App-Store-Anwendung. Über die App-Store-Anwendung kann eine (Internet-)Verbindung des Geräts 2 zu einem App-Store herstellbar sein. Das Computerprogrammprodukt 10 ist beispielsweise als eine App über diese App-Store-Anwendung von dem Datenspeicher 11 des Computers 3 auf den Datenspeicher 11 des Geräts 2 ladbar und wird dort dauerhaft gespeichert. Alternativ ist es aber auch möglich, dass das Computerprogrammprodukt 10 als eine Web-App über den Internet-Browser des Geräts 2 von einer Internet-Seite eines Providers von dem Datenspeicher 11 des Computers 3 auf den Datenspeicher 9 des Geräts ladbar ist. Das Computerprogramm wird dann beispielsweise auf dem Datenspeicher 9 temporär für die Durchführung des Verfahrens gespeichert und anschließend automatisch wieder gelöscht.

Das Gerät umfasst mehrere (drahtlose) Datenschnittstellen 17, wie beispielsweise eine Funkschnittstelle, um das Gerät mit dem Internet verbinden zu können.

Das mobile (portable) elektronische Gerät 2 ist leicht und klein, so dass es von einem Nutzer während der Anzeige der Beleuchtungsbilder und der Erfassung der Messbilder bequem mit nur einer Hand in einer geeigneten Position relativ zum Messobjekt ausgerichtet und gehalten werden kann. Das Gerät 2 wiegt daher vorzugsweise weniger als 1 kg, beispielsweise etwa 200 g. Eine maximale Kantenlänge des ungefähr quaderförmigen Gehäuses 5 beträgt beispielsweise weniger als 20 cm, beispielweise etwa 16 cm, und eine minimale Kantenlänge beträgt beispielsweise weniger als 1 cm, beispielsweise etwa 8 mm.

Die Kamera 6 des Geräts umfasst ein Objektiv 18, das auf einer Vorderseite 19 des Gehäuses 5 angeordnet ist und den Beobachtungsbereich 20 der Kamera 6 definiert. Die Kamera 5 umfasst einen Bildsensor 21, beispielsweise einen lichtempfindlichen Halbleiterchip, wie beispielsweise ein CCD - oder CMOS-Sensor oder einen InGaAs-Sensor. Der Bildsensor 21 weist eine Vielzahl in einem Gesamtraster angeordneter Sensoreinheiten (nicht dargestellt) auf. Jede der Sensoreinheiten umfasst mehrere benachbarte lichtempfindliche Sensorelemente (nicht dargestellt) des Bildsensors 21, die unterschiedlichen Farbkanälen der Kamera 6 angehören. Jede Sensoreinheit entspricht einem Bildpunkt (Pixel) eines mittels der Kamera 6 erfassten Messbildes. Die Positionen der Sensoreinheiten und ihrer Sensorelemente innerhalb des Bildsensors sind durch zwei Sensorkoordinaten (XY) der jeweiligen Sensoreinheit definiert.

Die Kamera 5 ist für Licht mit den Wellenlängen zwischen etwa 400 nm und etwa 800 nm empfindlich und weist einen roten, einen grünen und einen blauen Farbkanal auf. Für jeden der Farbkanäle weist die Kamera eine kanalspezifische spektrale Empfindlichkeit $C_c(\lambda)$ auf. Jeder der Farbkanäle der Kamera ist durch eine Teilmenge der Sensorelemente des Bildsensors 21 gebildet, deren spektralen Empfindlichkeiten mit der kanalspezifischen spektralen Empfindlichkeit des jeweiligen Farbkanals der Kamera übereinstimmen. Die Sensorelemente jedes Farbkanals sind somit jeweils in einem Teilraster angeordnet, dass sich über den Bildsensor 21 erstreckt. Die Teilraster der Sensorelemente der verschiedenen Farbkanäle überlagern sich räumlich gegenseitig und bilden so das Gesamtraster der Sensoreinheiten des Bildsensors 21.

Der Bildschirm 7 ist ebenfalls auf der Vorderseite 19 des Gehäuses 5 angeordnet und emittiert Licht im sichtbaren Spektralbereich zwischen etwa 400 nm und etwa 800 nm. Der Bildschirm 7 weist wie die Kamera 6 einen roten, einen grünen und einen blauen Farbkanal auf. In jedem der Farbkanäle weist der Bildschirm 7 eine kanalspezifische spektrale Emissionscharakteristik $D_d(\lambda)$, welche den drei Grundfarben Rot, Grün und Blau des Bildschirms 7 entsprechen. Der Bildschirm 7 weist eine Vielzahl in einem Gesamtraster des Bildschirms 7 angeordneter Leuchtelemente (nicht dargestellt) auf, welche Bildpunkte (Pixel) des Bildschirms 7 bilden und zusammen eine Gesamtbildfläche 22 des Bildschirms 7 befüllen. Jeder der Farbkanäle ist durch eine Teilmenge der Leuchtelemente des Bildschirms gebildet ist, deren spektralen Emissionscharakteristika mit der kanalspezifischen spektralen Emissionscharakteristik des jeweiligen Farbkanals übereinstimmen. Jeder Bildpunkt des Bildschirms wird durch eine Gruppe benachbarter Leuchtelemente gebildet, die den unterschiedlichen Farbkanälen angehören.

Neben einem Lautsprecher und einem Mikrophon (beides nicht dargestellt) beispielsweise für Telefonie-Anwendungen umfasst das Gerät außerdem einen wiederaufladbaren Energiespeicher 45 zum Versorgen der Komponenten des Geräts 2 mit elektrischer Energie.

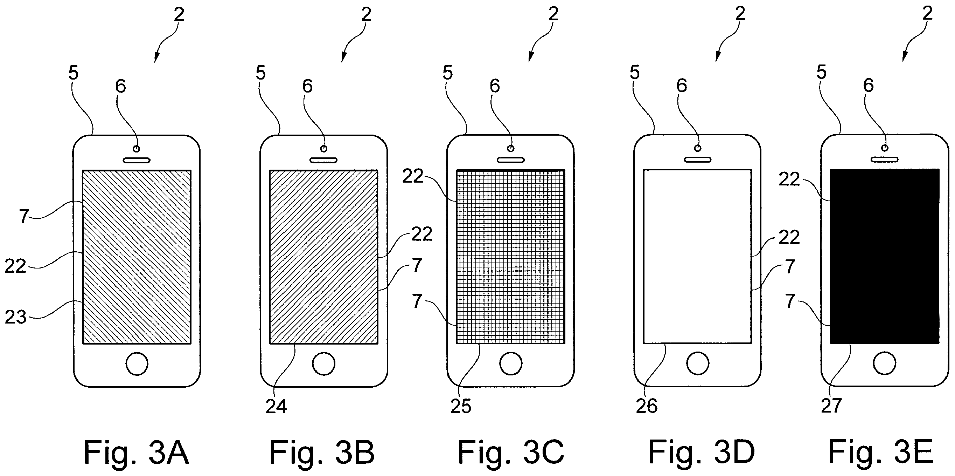

In Figuren 3A bis 3E ist das elektronische Gerät des in Figur 1 gezeigten Systems 1 jeweils in einer Ansicht von vorne gezeigt, wobei mittels des Bildschirms 7 jeweils ein Beleuchtungsbild einer ersten vordefinierten Beleuchtungsbildungsfolge angezeigt wird. In dem gezeigten Beispiel umfasst diese erste Beleuchtungsbildfolge: ein rotes Beleuchtungsbild 23, ein grünes Beleuchtungsbild 24, ein blaues Beleuchtungsbild 25 und ein weißes Beleuchtungsbild 26 (Weißbild). Außerdem wird ein schwarzes Beleuchtungsbild 27 (Schwarzbild) angezeigt.

Die Steuereinheit 8 des mobilen elektronischen Geräts 2 ist eingerichtet, den Bildschirm 7 des mobilen elektronischen Geräts 2 anzusteuern,

- das rote Beleuchtungsbild 23 anzuzeigen durch ein Aktivieren der Leuchtelemente nur des roten Farbkanals des Bildschirms 7 und durch ein Ansteuern aller aktivierten Leuchtelemente des roten Farbkanals mit einem für den roten Farbkanal vordefinierten einheitlichen Helligkeitswert,
- das grüne Beleuchtungsbild 24 anzuzeigen durch ein Aktivieren der Leuchtelemente nur des grünen Farbkanals des Bildschirms 7 und durch ein Ansteuern aller aktivierten Leuchtelemente des grünen Farbkanals mit einem für den grünen Farbkanal vordefinierten einheitlichen Helligkeitswert, und
- das blaue Beleuchtungsbild 25 anzuzeigen durch ein Aktivieren der Leuchtelemente nur des blauen Farbkanals des Bildschirms und durch ein Ansteuern aller aktivierten Leuchtelemente des blauen Farbkanals mit einem für den blauen Farbkanal vordefinierten einheitlichen Helligkeitswert.

Alternativ zu den einheitlichen Helligkeitswerten könnten die aktivierten Leuchtelemente des jeweiligen Farbkanals beispielsweise auch mit unterschiedlichen Helligkeitswerten angesteuert werden, die sich beispielsweise gemäß einem Gradienten (über den Bildschirm hinweg) voneinander unterscheiden.

Die nicht-aktivierten Leuchtelemente der jeweils übrigen Farbkanäle werden ausgeschaltet oder jeweils mit einem kleinstmöglichen Helligkeitswert angesteuert werden.

Das Weißbild 26 wird erzeugt, indem die Steuereinheit 8 alle Leuchtelemente des Bildschirms 7 aktiviert und mit dem größtmöglichen Helligkeitswert angesteuert. Das Schwarzbild 27 wird erzeugt, indem die Steuereinheit 8 alle Leuchtelemente des Bildschirms 7 ausschaltet oder deaktiviert oder mit dem kleinstmöglichen Helligkeitswert ansteuert. Das weiße Beleuchtungsbild und das schwarze Beleuchtungsbild werden von der Auswerteeinheit 13 zur Kalibrierung der übrigen Messbilder und zur Abschätzung von Umgebungslichteinflüssen verwendet.

Die Beleuchtungsbilder 23, 24, 25, 26, 27 der ersten Beleuchtungsbildfolge füllen die Gesamtbildfläche 22 des Bildschirms 7 jeweils vollständig aus. Neben den oben genannten Helligkeitswerten ist die erste Beleuchtungsbildfolge durch folgende weitere Beleuchtungsparameter definiert:

- Gesamtzahl der Beleuchtungsbilder, in diesem Fall drei Farbbilder, ein Weißbild und ein Schwarzbild,
- Reihenfolge der Beleuchtungsbilder, in diesem Fall beispielsweise die Reihenfolge rot, grün, blau, weiß, schwarz (oder eine grundsätzlich beliebige andere vordefinierte Reihenfolge),

- Anzeigedauer der Beleuchtungsbilder, in diesem Beispiel in einem Bereich zwischen 100 ms und 200 ms, beispielsweise 150 ms,
- zeitlicher Abstand zwischen dem Anzeigen der einzelnen Beleuchtungsbilder, in diesem Beispiel in einem Bereich zwischen 5 ms und 10 ms, beispielsweise 7 ms.

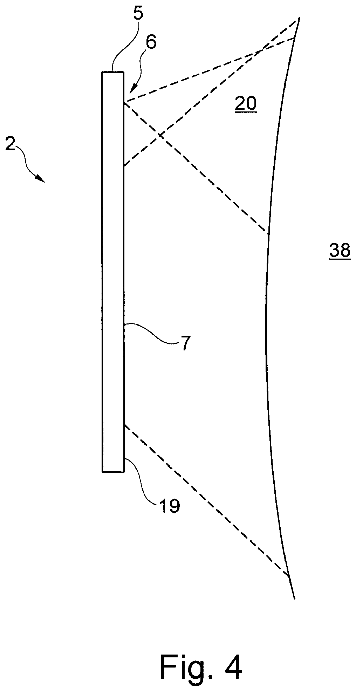

In Figur 4 ist das mobile elektronische Gerät 2 in einer Seitenansicht gezeigt, während mittels des Bildschirms 7 eines der Beleuchtungsbilder der vordefinierten ersten Beleuchtungsbildfolge angezeigt wird, beispielsweise das rote Beleuchtungsbild 23. Außerdem ist ein Teil eines Messobjekts 38 dargestellt, das in dem Beobachtungsbereich 20 der Kamera 6 angeordnet ist. Während des Anzeigens Beleuchtungsbildes 23 emittiert der Bildschirm 7 des Geräts 2 rotes Licht (in Figur 4 mit gestrichelten Linien dargestellt) und beleuchtet das Messobjekt 38 mit diesem roten Licht. Beim synchronen Aufnehmen des zu dem Beleuchtungsbild 23 gehörigen Messbildes wird das vom Messobjekt 23 reflektierte Licht (in Figur 4 mit gestrichelten Linien dargestellt) von der Kamera 6 erfasst und belichtet den Bildsensor 21. Dies wird entsprechend für die anderen Beleuchtungsbilder der ersten Beleuchtungsbildfolge wiederholt.

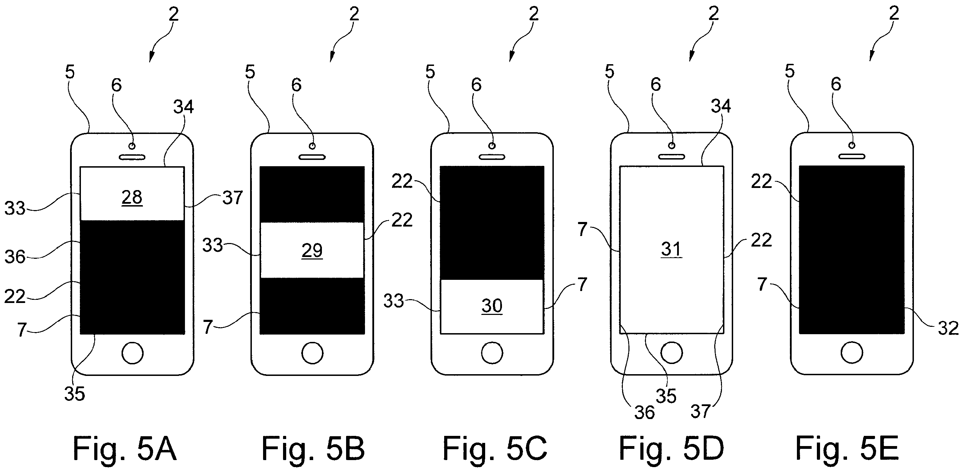

In Figuren 5A bis 5E ist das elektronische Gerät des in Figur 1 gezeigten Systems 1 erneut in einer Ansicht von vorne gezeigt, wobei mittels des Bildschirms 7 jeweils ein Beleuchtungsbild einer zweiten vordefinierten Beleuchtungsbildungsfolge angezeigt wird. In dem gezeigten Beispiel umfasst diese zweite Beleuchtungsbildfolge: ein erstes Beleuchtungsbild 28, ein zweites Beleuchtungsbild 29, ein drittes Beleuchtungsbild 30 und ein weißes Beleuchtungsbild 31 (Weißbild). Außerdem wird ein schwarzes Beleuchtungsbild 32 (Schwarzbild) angezeigt. Das Weißbild 31 unterscheidet sich nicht von dem Weißbild 26 der ersten Beleuchtungsbildfolge. Ebenso unterscheidet sich das Schwarzbild 32 sich nicht von dem Schwarzbild 27 der ersten Beleuchtungsbildfolge.

Das erste, zweite und dritte Beleuchtungsbild 28, 29, 30 sind jeweils zusammenhängend und füllen jeweils nur einen Teilbereich 33 der Gesamtbildfläche 22 des Bildschirms 7 aus. Beispielsweise werden die Leuchtelemente des Bildschirms 7 innerhalb des jeweils ausgefüllten Teilbereichs 33 in jedem Farbkanal mit dem größtmöglichen Helligkeitswert angesteuert. Außerhalb des jeweils ausgefüllten Teilbereich 33 werden die Leuchtelemente ausgeschaltet oder nicht aktiviert, leuchten also nicht oder nur mit der kleinstmöglichen Helligkeit. Die jeweils ausgefüllten Teilbereiche 33 der Beleuchtungsbilder überlappen sich auf dem Bildschirm 7 nicht gegenseitig. Der von den Beleuchtungsbildern jeweils ausgefüllte Teilbereich 33 entspricht in diesem Beispiel 1/3 der Gesamtbildfläche 22 des Bildschirms 7. Alternativ könnte die Beleuchtungsbildfolge aber auch eine andere Anzahl derartiger Beleuchtungsbilder umfassen, beispielsweise R Beleuchtungsbilder, die jeweils nur ein $1/R$-tel der Gesamtbildfläche des Bildschirms ausfüllen, wobei R beispielsweise eine natürliche Zahl ist, die größer 3 und kleiner als 20 ist.

Die ausgefüllten Teilbereiche 33 des ersten, zweiten und dritten Beleuchtungsbildes 28, 29, 30 unterscheiden sich in ihrer Anordnung auf dem Bildschirm 7. In der gezeigten Ansicht hat die Gesamtbildfläche 23 des Bildschirms 7 einen oberen Rand 34, einen unteren Rand 35, einen linken Rand 36 und einen rechten Rand 37. Die ausgefüllten Teilbereiche 33 der Beleuchtungsbilder 28, 29, 30 unterscheiden sich in ihrem Abstand von dem oberen Rand 34 und somit auch von dem Objektiv 18 der Kamera 5, das oberhalb des oberen Rands 34 der Gesamtbildfläche 23 des Bildschirms 7 angeordnet ist.

Neben den oben definierten Helligkeitswerten ist die zweite Beleuchtungsbild durch folgende weitere Beleuchtungsparameter definiert:

-   Gesamtzahl der Beleuchtungsbilder, in diesem Fall drei weiße Beleuchtungsbilder, die jeweils nur einen Teilbereich 33 des Bildschirms 7 ausfüllen, sowie ein Weißbild und ein Schwarzbild,
-   Reihenfolge der Beleuchtungsbilder, in diesem Fall beispielsweise die Reihenfolge erstes, zweites, drittes Beleuchtungsbild 28, 29, 30, Weißbild 31, Schwarzbild 32 (oder eine grundsätzlich beliebige andere vordefinierte Reihenfolge),
-   Anzeigedauer der Beleuchtungsbilder, in diesem Beispiel in einem Bereich zwischen 100 ms und 200 ms, beispielsweise 150 ms,
-   zeitlicher Abstand zwischen dem Anzeigen der einzelnen Beleuchtungsbilder, in diesem Beispiel in einem Bereich zwischen 5 ms und 10 ms, beispielsweise 7 ms.

Die Steuereinheit 8 des mobilen elektronischen Geräts 2 ist entsprechend eingerichtet, den Bildschirm 7 des mobilen elektronischen Geräts 2 anzusteuern, die Beleuchtungsbilder der zweiten Beleuchtungsbildfolge anzuzeigen und synchron hierzu Messbilder zu erfassen, wie bereits im Zusammenhang mit der ersten Beleuchtungsbildfolge beschrieben worden ist.

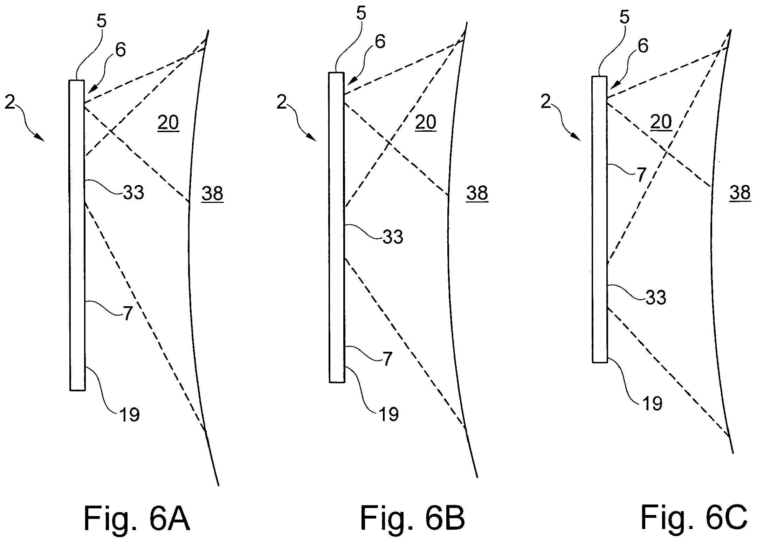

In Figuren 6A bis 6C ist das mobile elektronische Gerät 2 jeweils in einer Seitenansicht gezeigt, während mittels des Bildschirms 7 das erste, zweite bzw. dritte Beleuchtungsbild 28, 29, 30 der zweiten Beleuchtungsbildfolge angezeigt wird. Außerdem ist erneut ein Teil eines Messobjekts 38 dargestellt, das in dem Beobachtungsbereich 20 der Kamera 6 angeordnet ist. Während des Anzeigens der Beleuchtungsbilder 23 emittiert der Bildschirm 7 des Geräts 2 Licht (in Figur 4 mit gestrichelten Linien dargestellt) und beleuchtet das Messobjekt 38 jeweils aus einer unterschiedlichen Richtung. Beim synchronen Aufnehmen des zu dem Beleuchtungsbild 23 gehörigen Messbildes wird das vom Messobjekt 23 reflektierte Licht (in Figur 4 mit gestrichelten Linien dargestellt) von der Kamera 6 erfasst und belichtet den Bildsensor 21.

Über die Benutzerschnittstelle 16 des Geräts 2 ist es beispielsweise möglich, zwischen der ersten und der zweiten Beleuchtungsbildfolge auszuwählen. Es kann auch vorgesehen sein, dass die Steuereinheit 8 automatisch zwischen der ersten und der zweiten Beleuchtungsbildfolge auswählt, beispielsweise in Abhängigkeit von der Art des Messobjekts 38 oder in Abhängigkeit von einer zu untersuchenden Eigenschaft des Messobjekts 38. Beispielsweise kann die Art des Messobjekts 38 und die zu untersuchende Eigenschaft über die Benutzerschnittstelle 16 eingegeben werden. Die Auswerteeinheit 13 ist eingerichtet, die Auswertung der Messbilder in Abhängigkeit von dieser Eingabe durchzuführen.

Die Auswertung kann prinzipiell von weiteren mittels des Geräts ermittelten Größen abhängen, beispielsweise von einer aktuellen Zeit und aktuellen Ortskoordinaten des Geräts 2 während des Aufnehmens der Messbilder. Die Zeit kann beispielsweise mittels einer Systemuhr des Geräts und die Ortskoordinaten mittels eines GPS-Moduls 44 des Geräts 2 ermittelt worden sein. Beispielsweise kann jedes Messbild einen entsprechenden Zeit- und Ortsstempel tragen. Auf diese Weise können beispielsweise ortsabhängige Einflussgrößen ermittelt werden, die mit den zu untersuchenden Eigenschaften des Messobjekts korreliert sind oder diese beeinflussen können. Dies ist beispielsweise der Fall, wenn das zu untersuchende Messobjekt beispielsweise menschliche Haare sind und die zu untersuchende Eigenschaft beispielsweise der Glanz der Haare ist, da die jeweils vorherrschende Haarstruktur in verschiedenen Regionen der Erde unterschiedlich ist. Darüber hinaus kann auf Basis der GPS-Daten die Funktionalität des Systems gesteuert, eingeschränkt, oder gänzlich unterbunden werden. Beispielsweise kann die Steuereinheit 8 eingerichtet sein, das Verfahren nur in bestimmten Ländern oder kleineren geografischen Regionen (z.B. Produktionsstandorte, Einkaufszentren) uneingeschränkt durchzuführen, in anderen Ländern oder kleineren geografischen Regionen (z.B. Produktionsstandorte, Einkaufszentren) das Verfahren (insbesondere die Aufnahme der Messbilder und/oder deren Auswertung) nur eingeschränkt oder in modifizierter Form durchzuführen und in wiederum anderen Ländern oder kleineren geografischen Regionen (z.B. Produktionsstandorte, Einkaufszentren) die Durchführung des Verfahrens vollständig zu blockieren.

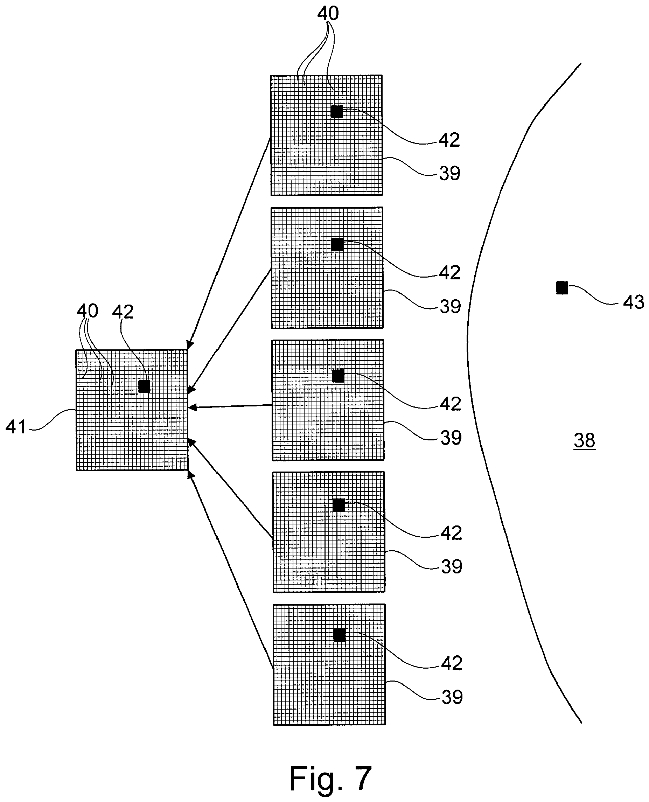

Figur 7 zeigt eine schematische Darstellung mehrerer Messbilder 39, die mit dem Gerät 2 des in Figur 1 gezeigten Systems 1 von dem Messobjekt 38 erfasst worden sind. Beispielsweise handelt es sich bei den gezeigten Messbildern 39 um die Messbilder, die synchron zur Anzeige der Beleuchtungsbilder 23 bis 27 der ersten Beleuchtungsbildfolge erfasst wurden, oder um die Messbilder, die synchron zur Anzeige der Beleuchtungsbilder 28 bis 32 der zweiten Beleuchtungsbildfolge erfasst wurden.

Jedes der mittels der Kamera 6 aufgenommenen Messbilder 39 umfasst eine Vielzahl in einem Gesamtraster angeordneter Bildpunkte 40 (Pixel), die den Sensoreinheiten des Bildsensors zugeordnet sind und deren Positionen innerhalb des jeweiligen Messbildes durch zwei Bildkoordinaten (XY) definiert sind, die von den Sensorkoordinaten derjeweiligen Sensoreinheiten abhängig sind bzw. diesen entsprechen. Die Messbilder 39 beinhalten Bilddaten, in denen Bildinformationen kodiert sind, insbesondere Helligkeitswerte der jeweiligen Bildpunkte der Messbilder. Die Helligkeitswerte der Bildpunkte 40 der Messbilder 39 sind beispielsweise vom Ladungs- oder Entladungszustand der Sensorelemente jeweils zugeordneten Sensoreinheiten des Bildsensors 21 beim Erfassen des jeweiligen Messbildes 39 abhängig.

Wie in Figur 6 ebenfalls dargestellt ist, werden die Bildpunkte 40 der Messbilder 39 mittels der Auswerteeinheit 13 des Geräts 2 (alternativ mittels der Auswerteeinheit 14 des Computers 3) mittels einer Bildregistrierung zu einem registrierten Messbild 41 zusammengeführt und die Bilddaten zusammengeführter Bildpunkte 40 zu Messdatensätzen der jeweiligen zusammengeführten Bildpunkte 40 des registrierten Messbildes 41 zusammengefasst. Für die Bildregistrierung der Messbilder 39 werden, falls erforderlich Bildtransformationen der Messbilder 39 durchgeführt, z.B. (lokale) Koordinatentransformationen (Drehungen, Verschiebungen, Verkippung und/oder (lokale) Reskalierungen, Subpixelinterpolation).

Außerdem wird mittels der Auswerteeinheit 13 des Geräts (alternativ mittels der Auswerteeinheit 14 des Computer 3) auf der Grundlage des registrierten Messbildes 40 ein Objekterkennungsalgorithmus durchgeführt, um in dem registrierten Messbild 41 Objektbildpunkte 42 zu identifizieren, also solche Bildpunkte 40, die Objektpunkte 43 des Messobjekts 38 abbilden. Der Objekterkennungsalgorithmus basiert auf einem "Region growing"-Algorithmus, wie weiter oben beschrieben.

Handelt es sich bei den Messbildern 39 um die Messbilder, die synchron zur Anzeige der Beleuchtungsbilder 23 bis 27 der ersten Beleuchtungsbildfolge erfasst wurden, kann jeder der Messdatensätze beispielsweise der oben beschriebene "spektrale Fingerabdruck" $F(d, c)$ des Messobjekts in dem jeweils zugehörigen Objektpunkt 43 des Messobjekts 38 sein, dessen Komponenten beispielsweise wie in Tabelle 1 angegeben definiert sind. Der Index d ist durch $d = \{r, g, b, w, s\}$ definiert, wobei $r, g, b$ für das rote, grüne bzw. blaue Beleuchtungsbild 23, 24, 25 stehen und w für das Weißbild 26, und s für das Schwarzbild 27. Entsprechend steht Index c für die Farbkanäle der Kamera 6 und ist durch $c = \{r, g, b\}$ definiert, wobei $r, g, b$ für den roten, grünen bzw. blauen Farbkanal der Kamera 6 steht.

Handelt es sich bei den Messbildern 39 um die Messbilder, die synchron zur Anzeige der Beleuchtungsbilder 28 bis 32 der zweiten Beleuchtungsbildfolge erfasst wurden, sind die zusammengefassten Messdatensätze der einzelnen Objektbildpunkte 52 beispielsweise die oben beschriebenen "Glanzmessvektoren" $G(a)$, wobei der Index a die einzelnen Beleuchtungsbilder der ersten Beleuchtungsbildfolge repräsentiert. Wie oben beschrieben worden ist, werden bei dem ersten, zweiten und dritten Beleuchtungsbild 28, 29, 30 der zweiten Beleuchtungsbildfolge alle Farbkanäle des Bildschirms 7 in den jeweiligen Teilbereichen 33 mit dem größtmöglichen Helligkeitswert angesteuert, so dass diese Beleuchtungsbilder weiß erscheinen. Beispielsweise enthält der Glanzmessvektor $G(a)$ für jeden Index a den mit allen Sensorelementen der Kamera 6 (im Objektbildpunkt 42) gemessenen Gesamthelligkeitswert.

Es lassen sich prinzipiell beliebig viele weitere Beleuchtungsbildfolgen definieren, welche auf den jeweiligen Anwendungsfall, d.h. auf das jeweilige Messobjekt und die jeweils zu untersuchenden Eigenschaften des Messobjekts abgestimmt sind. Wie bereits oben beschrieben wurde, kann eine Beleuchtungsbildfolge Beleuchtungsbilder beinhalten, die sich sowohl in ihrer Position $a$ auf dem Bildschirm als auch in ihrer Farbe voneinander unterscheiden. Beispielsweise kann für jede Position $a$ der oben beschriebene spektrale Fingerabdruck $F(c, d)$ erfasst werden, wobei die farbigen Beleuchtungsbilder nur den beschriebenen Teilbereich 33 in der jeweiligen Position ausfüllen. Auf diese Weise lässt sich für jeden Objektpunkt beispielsweise der oben beschriebene Messdatensatz $H(c, d, a)$ erzeugen, der Informationen sowohl über die spektrale Reflexionseigenschaften wie auch über den Glanz des Messobjekts in dem jeweiligen Objektpunkt beinhaltet.

Die Auswerteeinheit 13 ist beispielsweise eingerichtet, jeden zu einem Objektbildpunkt 42 gehörigen Messdatensatz $F(c, d)$ (oder alternativ $G(a)$ oder $H(c, d, a)$) mit mehreren vordefinierten Referenzdatensätzen zu vergleichen. Die Referenzdatensätze sind beispielsweise in dem Datenspeicher 9 des mobilen elektronischen Geräts 2 gespeichert. Der Vergleich erfolgt beispielsweise mittels eines mathematischen Klassifikationsmodells auf Basis eines - entsprechend trainierten - künstlichen neuronalen Netzes. Es wird bei der Klassifikation beispielsweise ein Ranking erzeugt, bei dem derjenige Referenzdatensatz einen umso höheren Rang erhält, je weniger sich der jeweilige Messdatensatz von diesem unterscheidet. Nach dem Vergleich aller Messdatensätze mit den Referenzdatensätzen identifiziert die Auswerteeinheit 13 denjenigen Referenzdatensatz, der am häufigsten den obersten Rang erhalten hat. Über die Benutzerschnittstelle 16 wird anschließend eine zu diesem identifizierten Referenzdatensatz gehörige Bewertung einer Eigenschaft des Messobjekts oder eine Klassifikation des Messobjekts ausgegeben.

Die Auswerteeinheit ist außerdem eingerichtet, unter Berücksichtigung der spektralen Empfindlichkeit $C_c(\lambda)$ der Kamera und der spektralen Emissionscharakteristik $D_d(\lambda)$ des Bildschirms aus den Messdatensätzen eine Reflexionscharakteristik des Messobjekts zu ermitteln.

Je nach Anwendungsfall, der beispielsweise über die Benutzerschnittstelle 16 spezifiziert werden kann, handelt es sich bei der zu bestimmenden Reflexionscharakteristik beispielsweise um das Reflexionsspektrum $S(\lambda)$ des Messobjekts (in den jeweiligen Objektpunkten). Beispielsweise kann die Auswerteeinheit 13 eingerichtet sein, das Reflexionsspektrum $S(\lambda)$ aus dem gemessenen "spektralen Fingerabdruck" $F(d, c)$ unter Verwendung der oben angegebenen Gleichungen 1 bis 4 (näherungsweise) zu ermitteln bzw. als Näherung für das Reflexionsspektrum $S(\lambda)$ Werte für die spektralen Kanälen $S^k$ zu ermitteln.

Alternativ handelt es sich bei der zu ermittelnden Reflexionscharakteristik beispielsweise um die Abhängigkeit des Reflexionsgrads des Messobjekts (in den jeweiligen Objektpunkten) von dem Einfallwinkel des Lichts auf das Messobjekt (in dem jeweiligen Objektpunkten). Beispielsweise kann die Auswerteeinheit eingerichtet sein, den winkelabhängigen Reflexionsgrad auf der Grundlage des oben beschriebenen Glanzmessvektors $G(a)$ (oder des Messdatensatzes $H(c, d, a)$) für jeden Objektpunkt abzuschätzen.

Die Auswerteeinheit 13 ist ferner eingerichtet, die ermittelte Reflexionscharakteristik des Messobjekts, also beispielsweise die spektralen Kanäle $S^k$ oder die ermittelten Werte für den winkelabhängige Reflexionsgrad, mit mindestens einer vordefinierten Referenzreflexionscharakteristik zu vergleichen und das Messobjekt entsprechend zu klassifizieren, beispielsweise mittels eines Klassifikationsmodells auf der Basis eines künstlichen neuronalen Netzwerkes, wie oben beschrieben.

Anschließend können die Ergebnisse der Auswertung auf dem Bildschirm 7 angezeigt werden und in dem Datenspeicher 11 des Geräts gespeichert werden.

In Figur 7 ist das mit dem System 1 ausführbare Verfahren in Form eines Flussdiagrams dargestellt.

Schritt S1 umfasst:

- Ansteuern des Bildschirms 7 des mobilen elektronischen Geräts 2 mittels der Steuereinheit 8, mehrere verschiedene Beleuchtungsbilder der vordefinierten Beleuchtungsbildfolge nacheinander anzuzeigen,
- Ansteuern der Kamera 6 des mobilen elektronischen Geräts 2, synchron zum Anzeigen eines jeden Beleuchtungsbildes der vordefinierten Beleuchtungsbildfolge jeweils ein Messbild 39 von dem Messobjekt 38 zu erfassen.

Schritt S2 umfasst:

- Registrieren der Messbilder 39 zu einem registrierten Messbild 41.

Schritt S3 umfasst:

- eine spektrale Vorverarbeitung, wie beispielsweise eine Berücksichtigung von Umgebungslichteinflüssen, insbesondere unter Verwendung einer oder mehrerer Messbilder vom Messobjekt, die bei abgeschaltetem Display bzw. während der Anzeige eines schwarzen Beleuchtungsbildes aufgenommen worden sind. Bei zu starken Umgebungslichteinflüssen kann eine entsprechende Warnung an den Nutzer ausgegeben werden, beispielsweise mittels des Bildschirms 7 oder mittels eines Ton- oder Vibrationsalarms.

Schritt S4 umfasst:

- eine pixelweise Musterklassifikation, bei der Messdatensätze, die zu Bildpunkten oder Objektbildpunkten 42 des registrierten Messbildes 41 gehörigen, beispielsweise mittels eines mathematischen Klassifikationsmodells auf der Basis eines künstlichen neuronalen Netzes, klassifiziert werden.

Schritt S5 umfasst:

- Aggregation der Ergebnisse, beispielsweise mittels eines Ranking und/oder einer Mehrheitsabstimmung.

Schritt S6 umfasst:

- Anzeigen der Ergebnisse, beispielsweise mittels des Bildschirms 7, und Speichern der Ergebnisse, beispielsweise mittels des Datenspeichers 9 des Geräts und/oder des Datenspeichers 11 des Computers 3.

Prinzipiell ist es möglich, die Schritte S2 bis S6 alleine mit der Auswerteeinheit 13 des Geräts 2 oder aber, nach einer entsprechenden Übertragung der Messbilder 39, mit der Auswerteeinheit 14 des Computers 3 durchzuführen.
Das Messobjekt 38 kann beispielsweise durch menschliche (oder alternativ tierische) Haare gebildet sein. Eine zu untersuchende Eigenschaft kann beispielsweise der Glanz der Haare sein. Andere mögliche Beispiele für das Messobjekt 38 und zu untersuchende Eigenschaften sind unter den oben aufgeführten Anwendungskomplexen 1 bis 4 angegeben.

Bezugszeichenliste:

1 System
2 Gerät
3 Computer
4 Computernetzwerk
5 Gehäuse
6 Kamera
7 Bildschirm
8 Steuereinheit
9 Datenspeicher
10 Computerprogrammprodukt
11 Datenspeicher
12 Prozessor
13 Auswerteeinheit
14 Auswerteeinheit
15 Prozessor
16 Benutzerschnittstelle
17 Datenschnittstelle
18 Objektiv
19 Vorderseite
20 Beobachtungsbereich
21 Bildsensor
22 Gesamtbildfläche
23 bis 32 Beleuchtungsbild
33 Teilbereich
34 oberer Rand
35 unterer Rand
36 linker Rand

37    rechter Rand
38    Messobjekt
39    Messbilder
40    Bildpunkt
41    Messbild
42    Objektbildpunkt
43    Objektpunkt
44    GPS-Modul
45    Energiespeicher

**Patentansprüche**

1.  System (1) zum Erfassen von Messbildern eines Messobjekts, umfassend ein mobiles elektronisches Gerät, wobei das mobile elektronische Gerät (2) umfasst:

    - ein Gehäuse (5),
    - eine in dem Gehäuse (5) integrierte Kamera (6) zum Aufnehmen von Messbildern (39) eines Messobjekts (38) innerhalb eines Beobachtungsbereichs (20) der Kamera (6),
    - einen in dem Gehäuse (5) integrierten Bildschirm (7) zum lichtemittierenden Anzeigen von Bildern, wobei der Bildschirm (7) dem Beobachtungsbereich (20) der Kamera (6) zugewandt ist,
    - eine in dem Gehäuse (5) integrierte Steuereinheit (8), die eingerichtet ist, den Bildschirm (7) des mobilen elektronischen Geräts (2) anzusteuern, mehrere verschiedene Beleuchtungsbilder (23) einer vordefinierten Beleuchtungsbildfolge nacheinander anzuzeigen, wobei die Steuereinheit (8) eingerichtet ist, die Kamera (6) des mobilen elektronischen Geräts (2) anzusteuern, synchron zum Anzeigen eines jeden Beleuchtungsbildes (23) der vordefinierten Beleuchtungsbildfolge jeweils ein Messbild (39) von dem Messobjekt zu erfassen, wobei ein jedes der Messbilder (39) eine Vielzahl von Bildpunkten (40) sowie Bilddaten, die den Bildpunkten (40) zugeordnet sind, beinhaltet, wobei das System (1) eine Auswerteeinheit (13, 14) umfasst, **dadurch gekennzeichnet, dass**

    die Auswerteeinheit (13, 14) eingerichtet ist, die Bildpunkte (40) der Messbilder (39) mittels einer Bildregistrierung zusammenzuführen und die Bilddaten zusammengeführter Bildpunkte (43) zu Messdatensätzen zusammenzufassen, wobei die zusammengeführten Bildpunkte (40) ein registriertes Messbild (41) bilden, dessen Bildpunkte (43) die jeweils zugeordneten Messdatensätze beinhalten, wobei die Auswerteeinheit (13, 15) eingerichtet ist, mittels eines Objekterkennungsalgorithmus in dem registrierten Messbild (41) Objektbildpunkte (42) zu erkennen, die jeweils einen Objektpunkt (43) des Messobjekts (38) abbilden, wobei die Auswerteeinheit (13, 15) eingerichtet ist, ausgehend von einem ersten Bildpunkt, der als ein angenommener Objektbildpunkt definiert ist, zu prüfen, wie stark die Messdatensätze benachbarter Bildpunkte von dem Messdatensatz des ersten Bildpunktes abweichen, und nur solche benachbarte Bildpunkte ebenfalls als Objektbildpunkte zu klassifizieren, deren Messdatensätze eine ausreichend geringe Abweichung von dem Messdatensatz des ersten Bildpunktes aufweisen, und den Objekterkennungsalgorithmus jeweils ausgehend von erkannten Objektpunkten fortzusetzen, bis auf diese Weise keine weiteren Bildpunkte als Objektbildpunkte klassifiziert werden können.

2.  System (1) nach Anspruch 1, **dadurch gekennzeichnet, dass** der Bildschirm (7) des mobilen elektronischen Geräts (2) mehrere Farbkanäle aufweist, wobei der Bildschirm (7) in jedem der Farbkanäle eine kanalspezifische spektrale Emissionscharakteristik aufweist, wobei der Bildschirm (7) eine Vielzahl in einem Raster angeordneter Leuchtelemente aufweist, wobei jeder der Farbkanäle durch eine Teilmenge der Leuchtelemente des Bildschirms (7) gebildet ist, deren spektralen Emissionscharakteristika mit der kanalspezifischen spektralen Emissionscharakteristik des jeweiligen Farbkanals übereinstimmen.

3.  System (1) nach Anspruch 2, **dadurch gekennzeichnet, dass** der Bildschirm (7) des mobilen elektronischen Geräts (2) einen roten Farbkanal, einen grünen Farbkanal und einen blauen Farbkanal umfasst, wobei die Beleuchtungsabfolge ein rotes Beleuchtungsbild (23), ein grünes Beleuchtungsbild (24) und ein blaues Beleuchtungsbild (25) umfasst, wobei die Steuereinheit (8) des mobilen elektronischen Geräts (2) eingerichtet ist, den Bildschirm (7) anzusteuern,

    - das rote Beleuchtungsbild (23) anzuzeigen durch ein Aktivieren der Leuchtelemente nur des roten Farbkanals des Bildschirms (7) und durch ein Ansteuern aller aktivierten Leuchtelemente des roten Farbkanals mit einem für den roten Farbkanal vordefinierten einheitlichen Helligkeitswert,

- das grüne Beleuchtungsbild (24) anzuzeigen durch ein Aktivieren der Leuchtelemente nur des grünen Farbkanals des Bildschirms (7) und durch ein Ansteuern aller aktivierten Leuchtelemente des grünen Farbkanals mit einem für den grünen Farbkanal vordefinierten einheitlichen Helligkeitswert, und
- das blaue Beleuchtungsbild (25) anzuzeigen durch ein Aktivieren der Leuchtelemente nur des blauen Farbkanals des Bildschirms (7) und durch ein Ansteuern aller aktivierten Leuchtelemente des blauen Farbkanals mit einem für den blauen Farbkanal vordefinierten einheitlichen Helligkeitswert.

4. System (1) nach einem der vorausgehenden Ansprüche, **dadurch gekennzeichnet, dass** jedes der Beleuchtungsbilder jeweils nur einen Teilbereich (33) einer Gesamtbildfläche des Bildschirms (7) ausfüllt, wobei sich die ausgefüllten Teilbereiche (33) der Beleuchtungsbilder in ihrer Anordnung auf der Gesamtbildfläche des Bildschirms (7) voneinander unterscheiden, wobei die Gesamtbildfläche des Bildschirms (7) einen oberen Rand (34) aufweist, wobei sich die ausgefüllten Teilbereiche (33) der Beleuchtungsbilder in ihrem Abstand von dem oberen Rand (34) der Gesamtbildfläche des Bildschirms (7) voneinander unterscheiden, wobei das Objektiv oberhalb des oberen Rands (34) der Gesamtbildfläche des Bildschirms (7) angeordnet ist.

5. System (1) nach einem der vorangehenden Ansprüche, **dadurch gekennzeichnet, dass** die Kamera (6) des mobilen elektronischen Geräts (2) mehrere verschiedene Farbkanäle aufweist, wobei die Kamera (6) für jeden der Farbkanäle eine kanalspezifische spektrale Empfindlichkeit aufweist, wobei die Kamera (6) einen Bildsensor umfasst, der eine Vielzahl in einem Raster angeordneter Sensorelemente aufweist, wobei jeder der Farbkanäle der Kamera (6) durch eine Teilmenge der Sensorelemente des Bildsensors gebildet ist, deren spektralen Empfindlichkeiten mit der kanalspezifischen spektralen Empfindlichkeit des jeweiligen Farbkanals der Kamera (6) übereinstimmen.

6. System (1) nach einem der vorangehenden Ansprüche, **dadurch gekennzeichnet, dass** die Auswerteeinheit (13, 14) eingerichtet ist, die Messdatensätze mittels eines Algorithmus, der mittels maschinellen Lernens trainiert oder kalibriert worden ist, auszuwerten.

7. System (1) nach Anspruch 6, **dadurch gekennzeichnet, dass** der Algorithmus mittels eines überwachten Lernverfahrens oder mittels eines nicht-überwachten Lernverfahrens trainiert worden ist.

8. System nach einem der vorangehenden Ansprüche, **dadurch gekennzeichnet, dass** die Auswerteeinheit (13, 14) eingerichtet ist, die Messdatensätze mittels eines Klassifikationsverfahrens auszuwerten.

9. System nach einem der vorangehenden Ansprüche, **dadurch gekennzeichnet, dass** die Auswerteeinheit (13, 14) eingerichtet ist, die Messdatensätze mittels eines künstlichen neuronalen Netzwerkes auszuwerten.

10. System (1) nach einem der vorangehenden Ansprüche, **dadurch gekennzeichnet, dass** die Auswerteeinheit (13, 14) eingerichtet ist, jeden der Messdatensätze mit mindestens einem vordefinierten Referenzdatensatz zu vergleichen.

11. System (1) nach einem der vorangehenden Ansprüche, **dadurch gekennzeichnet, dass** die Auswerteeinheit (13, 14) eingerichtet ist, aus den Messdatensätzen mindestens eine Reflexionscharakteristik des Messobjekts (38) zu ermitteln, vorzugsweise unter Berücksichtigung einer spektralen Empfindlichkeit der Kamera (6) und einer spektralen Emissionscharakteristik des Bildschirms.

12. System (1) nach einem der vorangehenden Ansprüche, **dadurch gekennzeichnet, dass** der Bildschirm (7) M Farbkanäle und die Kamera (6) N Farbkanäle aufweist, wobei $M > 1$ und $N > 1$, wobei der Messdatensatz eines jeden Bildpunktes (43) des registrierten Messbildes (41) jeweils mindestens $M \times N$ Messwerte umfasst $(F(d,$ c) mit $1 \le d \le M$ und $1 \le c \le N$), wobei die $M \times N$ Messwerte $M \times N$ verschiedenen Kombinationen von Farbkanälen des Bildschirms (7) mit den Farbkanälen der Kamera (6) entsprechen.

13. Verfahren zum Erfassen von Messbildern eines Messobjekts mittels eines Systems nach einem der vorangehenden Ansprüche, umfassend die Schritte:

- Ansteuern des Bildschirms (7) des mobilen elektronischen Geräts (2) mittels der Steuereinheit (8), mehrere verschiedene Beleuchtungsbilder der vordefinierten Beleuchtungsbildfolge nacheinander anzuzeigen, und
- Ansteuern der Kamera (6) des mobilen elektronischen Geräts, synchron zum Anzeigen eines jeden Beleuchtungsbildes der vordefinierten Beleuchtungsbildfolge jeweils ein Messbild von dem Messobjekt zu erfassen,

**gekennzeichnet durch** die folgenden Schritte:

- Zusammenführen von Bildpunkten (40) der Messbilder (39) und Zusammenfassen von Bilddaten, die zusammengeführten Bildpunkten (40) zugeordnet sind, zu Messdatensätzen, wobei die zusammengeführten Bildpunkte (40) ein registriertes Messbild (41) bilden, dessen Bildpunkte (43) die jeweils zugeordneten Messdatensätze beinhalten, und

- Erkennen von Bildpunkten (43) in dem registrierten Messbild (41), die einen Teilbereich auf der Oberfläche des Messobjektes (38) abbilden, mittels eines Objekterkennungsalgorithmus, wobei ausgehend von einem ersten Bildpunkt, der als ein angenommener Objektbildpunkt definiert ist, geprüft wird, wie stark die Messdatensätze benachbarter Bildpunkte von dem Messdatensatz des ersten Bildpunktes abweichen, und nur solche benachbarte Bildpunkte ebenfalls als Objektbildpunkte klassifiziert werden, deren Messdatensätze eine ausreichend geringe Abweichung von dem Messdatensatz des ersten Bildpunktes aufweisen, wobei der Objekterkennungsalgorithmus jeweils ausgehend von erkannten Objektpunkten fortgesetzt wird, bis keine weiteren Bildpunkte als Objektbildpunkte klassifiziert werden können.

14. Computerprogrammprodukt (10), das direkt in einen internen Datenspeicher (11) des mobilen elektronischen Geräts (2) des Systems nach einem der Ansprüche 1 bis 12 geladen werden kann, und Softwarecodeabschnitte umfasst, mit denen die Schritte des Verfahrens gemäß Anspruch 13 ausgeführt werden, wenn das Computerprogrammprodukt (10) auf dem mobilen elektronischen Gerät (2) läuft.

**Claims**

1. A system (1) for capturing measurement images of a measurement object, comprising a mobile electronic device, the mobile electronic device (2) comprising:

- a housing (5),
- a camera (6) integrated in the housing (5) for recording measurement images (39) of a measurement object (38) within an observation range (20) of the camera (6),
- a screen (7) integrated in the housing (5) for the light-emitting display of images, the screen (7) facing the observation range (20) of the camera (6),
- a control unit (8) integrated in the housing (5), the control unit (8) configured to control the screen (7) of the mobile electronic device (2) to display a plurality of different illumination images (23) of a predefined illumination image sequence one after the other, the control unit (8) configured to control the camera (6) of the mobile electronic device (2) to capture a measurement image (39) of the measurement object synchronously with displaying of each illumination image (23) of the predefined illumination image sequence,
each of the measurement images (39) containing a plurality of pixels (40) and image data which are associated with the pixels (40), the system (1) comprising an evaluation unit (13, 14), **characterized in that**
the evaluation unit (13, 14) is configured to merge the pixels (40) of the measurement images (39) by means of image registration and to combine the image data of merged pixels (43) into measurement data sets, wherein the merged pixels (40) form a registered measurement image (41), the pixels (43) of which contain the respectively associated measurement data sets, wherein the evaluation unit (13, 15) is configured, by means of an object recognition algorithm in the registered measurement image (41), to recognize object pixels (42) each depicting an object point (43) of the measurement object (38), wherein the evaluation unit (13, 15) is configured to check, based on a first pixel which is defined as an assumed object pixel, how much the measurement data sets of neighboring pixels deviate from the measurement data set of the first pixel, and also to classify only those neighboring pixels as object pixels, whose measurement data sets have a sufficiently small deviation from the measurement data set of the first pixel, and to continue the object recognition algorithm respectively based on recognized object points, until no further pixels can be classified as object pixels in this way.

2. The system (1) according to claim 1, **characterized in that** the screen (7) of the mobile electronic device (2) comprises a plurality of color channels, wherein the screen (7) has a channel-specific spectral emission characteristic in each of the color channels, wherein the screen (7) comprises a plurality of light elements arranged in a grid, wherein each of the color channels is formed by a subset of the light elements of the screen (7), whose spectral emission characteristics match the channel-specific spectral emission characteristics of the respective color channel.

3. The system (1) according to claim 2, **characterized in that** the screen (7) of the mobile electronic device (2) comprises a red color channel, a green color channel and a blue color channel, wherein the illumination sequence comprises a red illumination image (23), a green illumination image (24) and a blue illumination image (25), wherein the control unit (8) of the mobile electronic device (2) is configured to control the screen (7),

- to display the red illumination image (23) by activating the light elements of only the red color channel of the screen (7) and by controlling all activated light elements of the red color channel using a uniform brightness value predefined for the red color channel,
- to display the green illumination image (24) by activating the light elements of only the green color channel of the screen (7) and by controlling all activated light elements of the green color channel using a uniform brightness value predefined for the green color channel, and
- to display the blue illumination image (25) by activating the light elements of only the blue color channel of the screen (7) and by controlling all activated light elements of the blue color channel using a uniform brightness value predefined for the blue color channel.

4. The system (1) according to any one of the preceding claims, **characterized in that** each of the illumination images only fills in a subregion (33) of a total image area of the screen (7), wherein the filled-in subregions (33) of the illumination images differ from one another in their arrangement on the total image area of the screen (7), wherein the total image area of the screen (7) comprises an upper edge (34), wherein the filled-in subregions (33) of the illumination images differ from one another in their distance from the upper edge (34) of the total image area of the screen (7), wherein the objective is arranged above the upper edge (34) of the total image area of the screen (7).

5. The system (1) according to any one of the preceding claims, **characterized in that** the camera (6) of the mobile electronic device (2) comprises a plurality of different color channels, wherein the camera (6) has a channel-specific spectral sensitivity for each of the color channels, wherein the camera (6) comprises an image sensor which comprises a plurality of sensor elements arranged in a grid, wherein each of the color channels of the camera (6) is formed by a subset of the sensor elements of the image sensor, whose spectral sensitivities match the channel-specific spectral sensitivity of the respective color channel of the camera (6).

6. The system (1) according to any one of the preceding claims, **characterized in that** the evaluation unit (13, 14) is configured to evaluate the measurement data sets by means of an algorithm that has been trained or calibrated by means of machine learning.

7. The system (1) according to claim 6, **characterized in that** the algorithm has been trained by means of a supervised learning process or by means of an unsupervised learning process.

8. The system according to any one of the preceding claims, **characterized in that** the evaluation unit (13, 14) is configured to evaluate the measurement data sets by means of a classification method.

9. The system according to any one of the preceding claims, **characterized in that** the evaluation unit (13, 14) is configured to evaluate the measurement data sets by means of an artificial neural network.

10. The system (1) according to any one of the preceding claims, **characterized in that** the evaluation unit (13, 14) is configured to compare each of the measurement data sets with at least one predefined reference data set.

11. The system (1) according to any one of the preceding claims, **characterized in that** the evaluation unit (13, 14) is configured to determine at least one reflection characteristic of the measurement object (38) from the measurement data sets, preferably taking into account a spectral sensitivity of the camera (6) and a spectral emission characteristic of the screen.

12. The system (1) according to any one of the preceding claims, **characterized in that** the screen (7) comprises M color channels and the camera (6) comprises N color channels, wherein $M > 1$ and $N > 1$, wherein the measurement data set of each pixel (43) of the registered measurement image (41) each comprises at least $M \times N$ measurement values $(F(d, c)$ with $1 \leq d \leq M$ and $1 \leq c \leq N)$, wherein the $M \times N$ measurement values correspond to $M \times N$ different combinations of color channels of the screen (7) with the color channels of the camera (6).

13. A method for capturing measurement images of a measurement object by means of a system according to any one of the preceding claims, comprising the steps:

- controlling the screen (7) of the mobile electronic device (2) by means of the control unit (8) to display a plurality of different illumination images of the predefined illumination image sequence one after the other, and
- controlling the camera (6) of the mobile electronic device to capture a measurement image of the measurement object synchronously with displaying of each illumination image of the predefined illumination image sequence,

**characterized by** the following steps:

- merging pixels (40) of the measurement images (39) and combining image data that are associated with merged pixels (40) into measurement data sets, the merged pixels (40) forming a registered measurement image (41), whose pixels (43) each contain associated measurement datasets, and
- recognizing pixels (43) in the registered measurement image (41), which depict a subregion on the surface of the measurement object (38), by means of an object recognition algorithm, wherein, based on a first pixel, which is defined as an assumed object pixel, it is checked how much the measurement data sets of neighboring pixels deviate from the measurement data set of the first pixel, and only those neighboring pixels are classified as object pixels, whose measurement data sets have a sufficiently small deviation from the measurement data set of the first pixel, wherein the object recognition algorithm is continued based on recognized object points until no further pixels can be classified as object pixels.

14. A computer program product (10) which can be loaded directly into an internal data memory (11) of the mobile electronic device (2) of the system according to any one of the claims 1 to 12, and comprising software code sections with which the steps of the method according to claim 13 are executed, when the computer program product (10) is running on the mobile electronic device (2).

## Revendications

1. Système (1) de saisie d'images de mesure d'un objet de mesure, comprenant un appareil électronique mobile, où l'appareil électronique mobile (2) comprend :

- un boitier (5),
- une caméra (6), intégrée dans le boitier (5), permettant la saisie d'images de mesure (39) d'un objet de mesure (38) à l'intérieur d'une zone d'observation (20) de la caméra (6),
- un écran (7), intégré dans le boitier (5), permettant l'affichage luminescent d'images, où l'écran (7) est orienté vers la zone d'observation (20) de la caméra (6),
- une unité de commande (8), intégrée dans le boitier (5), qui est conçue pour mettre en marche l'écran (7) de l'appareil électronique mobile (2), afin d'afficher l'une après l'autre plusieurs images d'éclairage (23) différentes d'une suite prédéfinie d'images d'éclairage, où l'unité de commande (8) est conçue pour mettre en marche la caméra (6) de l'appareil électronique mobile (2), afin de saisir respectivement une image de mesure (39) de l'objet de mesure de manière synchronisée par rapport à l'affichage de chaque image d'éclairage (23) de la suite prédéfinie d'images d'éclairage,
dans lequel chacune des images de mesure (39) contient une multiplicité de points d'image (40) ainsi que des données d'image, qui sont associées aux points d'image (40), où le système (1) comprend une unité d'exploitation (13, 14), **caractérisé en ce que**
l'unité d'exploitation (13, 14) est conçue pour regrouper les points d'image (40) des images de mesure (39) au moyen d'un enregistrement d'images et rassembler les données d'image de points d'image (43) regroupés en ensembles de données d'images, où les points d'image (40) regroupés forment une image de mesure (41) enregistrée, dont les points d'image (43) contiennent les ensembles de données d'image respectivement associés, où l'unité d'exploitation (13, 15) est conçue, au moyen d'un algorithme de reconnaissance d'image, pour reconnaître des points d'image d'objet (42) dans l'image de mesure (41), qui représentent respectivement un point d'objet (43) de l'objet de mesure (38), où l'unité d'exploitation (13,15) est conçue, en partant d'un premier point d'image, qui est défini comme étant un point d'image d'objet saisi, pour vérifier dans quelle mesure les ensembles de données de mesure de points d'image voisins dévient de l'ensemble de données de mesure du premier point d'image, et pour classer également comme des points d'images d'objet uniquement des points d'images voisins dont les ensembles de données de mesure présentent une déviation suffisamment faible par rapport à l'ensemble de données de mesure du premier point de mesure, et de poursuivre l'utilisation de l'algorithme de reconnaissance d'objet en partant respectivement de points d'objet reconnus jusqu'à ce que plus de nouveaux points d'image ne puissent être classés comme des points d'image d'objet de cette manière.

2. Système (1) selon la revendication 1, **caractérisé en ce que** l'écran (7) de l'appareil électronique mobile (2) présente plusieurs canaux de couleur, où l'écran (7) présente une caractéristique d'émission spectrale spécifique au canal dans chacun des canaux de couleur, où l'écran (7) présente une multiplicité d'éléments d'éclairage disposés dans une trame, où chacun des canaux de couleur est formé par une quantité partielle des éléments d'éclairage de l'écran (7) dont les caractéristiques d'émission spectrale correspondent avec la caractéristique d'émission spectrale spécifique au canal du canal de couleur respectif.

3. Système (1) selon la revendication 2, **caractérisé en ce que** l'écran (7) de l'appareil électronique mobile (2) comprend un canal de couleur rouge, un canal de couleur verte et un canal de couleur bleue, où la séquence de l'éclairage comprend une image d'éclairage rouge (23), une image d'éclairage verte (24) et une image d'éclairage bleue (25), où l'unité de commande (8) de l'appareil électronique mobile (2) est conçue pour mettre l'écran (7) en marche

- pour afficher l'image d'éclairage rouge (23) par une activation des éléments d'éclairage uniquement du canal de couleur rouge de l'écran (7) et par une mise en marche de tous les éléments d'éclairage activés du canal de couleur rouge avec une intensité lumineuse uniforme prédéfinie pour le canal de couleur rouge,
- pour afficher l'image d'éclairage verte (24) par une activation des éléments d'éclairage uniquement du canal de couleur verte de l'écran (7) et par une mise en marche de tous les éléments d'éclairage activés du canal de couleur verte avec une intensité lumineuse uniforme prédéfinie pour le canal de couleur verte, et
- pour afficher l'image d'éclairage bleue (25) par une activation des éléments d'éclairage uniquement du canal de couleur bleue de l'écran (7) et par une mise en marche de tous les éléments d'éclairage activés du canal de couleur bleue avec une intensité lumineuse uniforme prédéfinie pour le canal de couleur bleue.

4. Système (1) selon l'une des revendications précédentes, **caractérisé en ce que** chacune des images d'éclairage occupe respectivement uniquement une zone partielle (33) d'une surface d'image totale de l'écran (7), où les zones partielles (33) occupées par les images d'éclairage se différentient les unes des autres dans la disposition sur la surface d'image totale de l'écran (7), où la surface d'image totale de l'écran (7) présente un bord supérieur (34), où les zones partielles (33) occupées par les images d'éclairage se distinguent les unes des autres dans leurs distances par rapport au bord supérieur (34) de la surface d'image totale de l'écran (7), où l'objectif est disposé au-dessus du bord supérieur (34) de la surface d'image totale de l'écran (7).

5. Système (1) selon l'une des revendications précédentes, **caractérisé en ce que** la caméra (6) de l'appareil électronique mobile (2) présente plusieurs canaux de couleur différents, où la caméra (6) présente, pour chacun des canaux de couleur, une sensibilité spectrale spécifique au canal, où la caméra (6) comprend un capteur d'images, qui présente un grand nombre d'éléments de capteur disposés dans une trame, où chacun des canaux de couleur de la caméra (6) est formé par une quantité partielle des éléments de capteur du capteur d'images dont les sensibilités spectrales correspondent à la sensibilité spectrale spécifique au canal du canal de couleur respectif de la caméra (6).

6. Système (1) selon l'une des revendications précédentes, **caractérisé en ce que** l'unité d'exploitation (13, 14) est conçue pour évaluer les ensembles de données de mesure au moyen d'un algorithme qui a été entraîné ou étalonné au moyen d'un apprentissage machine.

7. Système (1) selon la revendication 6, **caractérisé en ce que** l'algorithme a été entrainé au moyen d'un procédé d'apprentissage supervisé ou au moyen d'un procédé d'apprentissage non supervisé.

8. Système selon l'une des revendications précédentes, **caractérisé en ce que** l'unité d'exploitation (13,14) est conçue pour évaluer les ensembles de données de mesure au moyen d'un procédé de classification.

9. Système selon l'une des revendications précédentes, **caractérisé en ce que** l'unité d'exploitation (13,14) est conçue pour évaluer les ensembles de données de mesure au moyen d'un réseau neuronal artificiel.

10. Système (1) selon l'une des revendications précédentes, **caractérisé en ce que** l'unité d'exploitation (13,14) est conçue pour comparer chacun des ensemble s de données de mesure avec au moins un ensemble de données de référence prédéfini.

11. Système (1) selon l'une des revendications précédentes, **caractérisé en ce que** l'unité d'exploitation (13,14) est conçue pour déterminer, à partir des ensembles de données de mesure, au moins une caractéristique de réflexion de l'objet de mesure (38), de préférence en tenant compte d'une sensibilité spectrale de la caméra (6) et d'une caractéristique d'émission spectrale de l'écran.

**12.** Système (1) selon l'une des revendications précédentes, **caractérisé en ce que** l'écran (7) présente *M* canaux de couleur et la caméra (6) présente N canaux de couleur, où *M > 1 et N* > 1, où l'ensemble des données de mesure d'un point d'image (43) donné de l'image de mesure (41) enregistrée comprend respectivement au moins $M \times N$ valeurs de mesure *(F(d,* c) avec $1 \leq d \leq M$ et $1 \leq c \leq N$), où les valeurs de mesure $M \times N$ correspondent à $M \times N$ combinaisons différentes de canaux de couleur de l'écran (7) avec les canaux de couleur de la caméra (6).

**13.** Procédé de saisie d'images de mesure d'un objet de mesure au moyen d'un système selon les revendications précédentes, comprenant les étapes :

- de mise en marche de l'écran (7) de l'appareil électronique mobile (2) au moyen de l'unité de commande (8), de sorte à indiquer plusieurs images d'éclairage différentes de la suite d'images d'éclairage, et
- de mise en marche de la caméra (6) de l'appareil électronique mobile pour saisir respectivement une image de mesure de l'objet de mesure de manière synchronisée par rapport à l'affichage de chaque image d'éclairage de la suite d'images d'éclairage prédéfinie,

**caractérisé par** les étapes suivantes :

- le regroupement de points d'image (40) des images de mesure (39) et l'assemblage de données d'image, qui sont associées aux points d'image (40) regroupés, pour donner des ensembles de données de mesure, où les points d'image (40) regroupés forment une image de mesure (41) enregistrée dont les points d'image (43) contiennent les ensembles de données de mesure respectivement associées, et
- la reconnaissance de points d'image (43) dans l'image de mesure (41) enregistrée, qui représentent une zone partielle sur la surface de l'objet de mesure (38), au moyen d'un algorithme de reconnaissance d'objet, où, en partant d'un premier point d'image, qui est défini comme étant un point d'image d'objet reconnu, on vérifie dans quelle mesure les ensembles de données de mesure de points d'image voisins dévient de l'ensemble de données de mesure du premier point d'image, et seuls des points d'image voisins sont classés comme étant également des points d'image d'objet, dont les ensembles de données de mesure présentent une déviation suffisamment faible par rapport à l'ensemble de données de mesure du premier point d'image, où l'algorithme de reconnaissance d'objet est encore utilisé en partant respectivement de points d'objets reconnus jusqu'à ce qu'aucun autre point d'image ne puisse plus être classé comme étant un point d'image d'objet.

**14.** Produit-programme informatique (10), qui peut être chargé directement dans une mémoire de données interne (11) de l'appareil électronique mobile (2) du système selon l'une des revendications 1 à 12, et comprend des segments de code de logiciel avec lesquels les étapes du procédé selon la revendication 13 sont exécutées lorsque le produit programme informatique (10) fonctionne sur l'appareil électronique mobile (2).

Fig. 1

Fig. 2

Fig. 3A  Fig. 3B  Fig. 3C  Fig. 3D  Fig. 3E

Fig. 4

Fig. 5A    Fig. 5B    Fig. 5C    Fig. 5D    Fig. 5E

EP 3 560 185 B1

Fig. 6A

Fig. 6B

Fig. 6C

EP 3 560 185 B1

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2690397 A1

**In der Beschreibung aufgeführte Nicht-Patentliteratur**

- **ZAFAR AFAR IQBAL et al.** Spectral Fingerprinting on a Standard Mobile Phone. *Journal of Sensors,* 01. Januar 2010, vol. 2010
- A Machine Learning Application for Classification of Chemical Spectra. **MICHAEL G. MADDEN et al.** Applications and Innovations in Intelligent Systems XVI. Springer, 01. Januar 2009

- **R. ROJAS.** Theorie der neuronalen Netze : Eine systematische Einführung. Springer, 1996
- **R. BRAUSE.** Neuronale Netze: Eine Einführung in die Neuroinformatik. Teubner, 1995
- **J. LUNZE.** Künstliche Intelligenz für Ingenieure. Oldenbourg, 2010